# EUROPÄISCHE PATENTSCHRIFT

(11) **EP 0 992 045 B1**
(45) Veröffentlichungstag und Bekanntmachung des Hinweises auf die Patenterteilung: **27.09.2006**
(21) Anmeldenummer: 98938661.0
(22) Anmeldetag: 26.06.1998
(51) Int. Cl.: H01G 9/00

(54) **VERFAHREN ZUM AUSFÜHREN EINER ELEKTROINSTALLATION UND BAUSATZ FÜR ELEKTROINSTALLATION**
METHOD FOR CARRYING OUT AN ELECTRICAL INSTALLATION AND KIT FOR SAID INSTALLATION
PROCEDE POUR REALISER UNE INSTALLATION ELECTRIQUE ET KIT POUR INSTALLATION ELECTRIQUE

(30) Priorität: 27.06.1997 DE 19727469; 14.10.1997 DE 19745385; 05.12.1997 DE 19754123; 05.12.1997 DE 19754122; 10.12.1997 DE 19754865
(43) Veröffentlichungstag der Anmeldung: 12.04.2000
(73) Patentinhaber: Elektro Ebert GmbH, 60389 Frankfurt/Main (DE)
(72) Erfinder: EBERT, Michael, D-60389 Frankfurt am Main (DE)
(74) Vertreter: Klunker . Schmitt-Nilson . Hirsch
(86) Internationale Anmeldenummer: PCT/EP1998/003926
(87) Internationale Veröffentlichungsnummer: WO 1999/000806

(56) Entgegenhaltungen:
- EP-A- 0 454 502
- EP-A- 0 698 954
- BE-A- 834 576
- CH-A- 684 977
- DE-A- 2 340 266
- DE-A- 3 302 373
- DE-A- 3 743 528
- DE-A- 4 412 673
- DE-U- 29 504 491
- FR-A- 2 268 374
- US-A- 4 070 516
- US-A- 4 449 015
- US-A- 4 875 871
- US-A- 5 130 893
- US-A- 5 463 838
- US-A- 5 558 536

## Beschreibung

Gegenstand der Erfindung ist eine Steckverbinderdose für die Elektroinstallation eines Gebäudes oder eines Teils eines Gebäudes, aufweisend folgende Merkmale:
(a) ein Bodenteil mit einer Kontaktplatte, in der mehrere Reihen elektrischer Kontaktmesser gehaltert sind, wobei bestimmte Reihen durchgängig elektrisch miteinander verbunden sind für den Anschluss an Phasenleiter (L), Nullleiter (N) etc. und wobei gegebenenfalls in anderen Reihen abschnittsweise Kontaktmesser vorhanden sind;
(b) mehrere, quer zu den Reihen verlaufende Steckplätze, für Schaltartelemente;
(c) mehrere Schaltartelemente sind an Schaltplätzen eingesteckt und stellen einerseits Kontakt zu Kontaktmessern her und sind andererseits elektrisch mit Leistungsdrähten verbunden;
(d) so dass durch die Anordnung von Kontaktplatte und eingesteckten Schaltartelementen eine Kontaktstellen-Matrix geschaffen wird, von der die Kontaktmesser die Reihen und die Schaltartelemente die Spalten bilden, wobei zwischen den Kontaktmessern und den Leitungsdrähten selektive Verbindungen hergestellt werden können;
(e) und ein Oberteil;
(f) wobei zwischen dem Bodenteil und dem Oberteil Durchgangsöffnungen für zugehende und abgehende Leitungsabschnitte ausgebildet sind.

Aus den Dokumenten DE 93 15 486 U und DE 296 05 846 U sind Steckverbinderdosen für Gebäude-Elektroinstallationen bekannt. Mit Steckverbindern am Ende ausgestattete Leitungen lassen sich durch Stecken elektrisch mit der Steckverbinderdose verbinden. Die innere Verdrahtung der Steckverbinderdosen und somit auch ihre Funktionalität liegt von der Herstellung her fest. In DE 296 05 846 U ist beschrieben, dass man an die Steckverbinderdose von außen her einen Programmierstecker, konkret einen Anschlussstecker für eine Leitung zu einem in dem Gebäude eingebauten Schalter für eine Leuchte, einstecken kann. Der Programmierstecker ändert Nichts an der inneren Verdrahtung der Steckverbinderdose. Die genannten Dokumente offenbaren insbesondere keine Kontaktplatte mit Kontaktmessern, mit eingesteckten Schaltartelementen, die mit Leitungsdrähten verbunden sind, und mit Kontaktstellen-Matrix, wobei zwischen den Kontaktmessern und den Leitungsdrähten selektiv Verbindungen hergestellt werden können.

Bevorzugte Ausgestaltungen der erfindungsgemäßen Steckverbinderdose sind in den Ansprüchen 2 bis 14 angegeben.

Weiterer Gegenstand der Erfindung ist ein Bausatz für die Elektroinstallation eines Gebäudes oder eines Teils eines Gebäudes, aufweisend Kontaktstellenmatrix-Steckverbinderdosen, die gemäß einem der Ansprüche 1 bis 14 ausgebildet sind, und ferner aufweisend:
(a) einen Ausführungsplan, aus dem die Art und die exakte Lage sämtlicher Installationspunkte, das sind Punkte für Schalter, Steckdosen etc., sowie der Verlauf und die Länge sämtlicher Leitungsabschnitte zwischen je zwei Installationspunkten entnehmbar sind, wobei die Installationspunkte und die Leitungsabschnitte jeweils mit einer eindeutigen Bezeichnung, z. B. Positionsnummer, versehen sind; und
(b) eine Menge von mit Steckverbindern vorkonfektionierten Leitungsabschnitten, jeweils mit Bezeichnung gemäß Ausführungsplan; wobei
(c) eine Menge von Steckverbinderdosen für sämtliche Installationspunkte, jeweils mit Bezeichnung gemäß Ausführungsplan, vorgesehen ist.

Bevorzugte Ausgestaltungen dieses Bausatzes sind in den Ansprüchen 16 bis 20 angegeben.

Weiterer Gegenstand der Erfindung ist ein Verfahren zum Ausführen einer Elektroinstallation in einem Gebäude oder einem Teil eines Gebäudes, unter Verwendung eines Bausatzes gemäß einem der Ansprüche 15 bis 20, gekennzeichnet durch folgende Schritte:
(a) ausgehend von einem Bauplan des Gebäudes bzw. des Teils des Gebäudes wird anhand von individuellen Vorgaben seitens eines Kunden ein Ausführungsplan erstellt, aus dem die Art und die exakte Lage sämtlicher Installationspunkte, das sind Punkte für Schalter, Steckdosen etc., sowie der Verlauf und die Länge sämtlicher Leitungsabschnitte zwischen je zwei Installationspunkten entnehmbar sind, wobei die Installationspunkte und die Leitungsabschnitte jeweils mit einer eindeutigen Bezeichnung, z. B. Positionsnummer, versehen sind,
(b) mit Hilfe des Ausführungsplans wird eine Stückliste erstellt für
   (b1) die Leitungsabschnitte; und
   (b2) die an den Installationspunkten zu montierenden Bauteile in Form von Steckverbinderdosen;
(c) es wird der Bausatz gemäß einem der Ansprüche 15 bis 20 erstellt;
(d) und mit Hilfe des Ausführungsplans erfolgen die Montage der Teile des Bausatzes und die elektrische Verbindung zwischen den Enden der Leitungsabschnitte und den Steckverbinderdosen.

Bevorzugte Ausgestaltungen dieses Verfahrens sind in den Ansprüchen 22 bis 25 angegeben.

In dem anschließenden allgemeinen Teil der Beschreibung werden noch weitere Ausführungen zur Erfindung und zu Vorzugsmerkmalen der Erfindung gemacht.

Zur Darstellung der Erfindung soll im folgenden vornehmlich auf ein Einfamilienhaus bezug genommen werden, und dort speziell auf die Elektroinstallation in einem Geschoß des Hauses, und innerhalb des Geschosses wiederum speziell auf die Elektroinstallation in einem einzigen Zimmer. Der Fachmann ersieht aber anhand der Ausführungen bezüglich der Elektroinstallation innerhalb eines Zimmers sofort die Übertragbarkeit und Allgemeingültigkeit der Lehre der Erfindung für die Elektroinstallation anderer Gebäudeteile und das gesamte Gebäude, sei es nun ein Wohnhaus oder ein Bürogebäude.

Die zur Verteilung elektrischer Energie in einem Gebäude dienende Anlage wird hier einfach mit "Elektroinstallation" bezeichnet. Ausgehend von dem Hauptsicherungskasten in einem Gebäude setzt sich die gesamte Elektroinstallation hauptsächlich zusammen aus Hauptleitung, Verteilereinrichtungen, Nebenleitungen, Schaltern und Verbrauchern.

Die Ausführung von Elektroinstallationsarbeiten in einem Gebäude ist den zugelassenen Fachbetrieben vorbehalten. Dies hat vornehmlich sicherheitstechnische Gründe. Auch wenn bei dem Bau eines Wohnhauses zahlreiche Arbeiten vom Bauherrn selbst ausgeführt werden, ist dies bei der Elektroinstallation nicht oder nur kaum möglich.

Der Fachbetrieb führt die Elektorinstallation anhand eines Installationsplans aus, der entsprechend den Wünschen des Bauherrns vor der Ausführung der Installation erstellt wird. Im Zuge der Rohinstallation werden dann die Unterputz-Dosen für Verteiler, Schalter, Steckdosen etc. angelegt, dann erfolgt das Verlegen der Leitungen, und im Anschluß daran das Verbinden der Leiterenden an Installationspunkten, das sind Punkte, an denen Abzweigungen, Schalteranschlüsse, Steckdosenanschlüsse und dergleichen vorhanden sind. Die konventionelle Art der Installation besteht darin, daß die Enden der verlegten Leitungskabel abisoliert und die zueinandergehörigen abisolierten Adern der Leitungen z. B. durch Lüsterklemmen miteinander verbunden werden. Diese Art der Installation erfordert beträchtliche Kenntnis des ausführenden Personals, da Verwechslungen von elektrisch miteinander zu verbindenden Leitern nicht vorkommen dürfen.

Das erfindungsgemäße Verfahren zum Ausführen einer Elektroinstallation in einem Gebäude oder einem Teil eines Gebäudes ermöglicht es auch "fachlich nicht geschultem Personal", in dem Gebäude sämtliche anfallenden Installationsarbeiten auszuführen. Außerdem sollen geeignete Installationskomponenten angegeben werden.

Gemäß einem ersten Aspekt dieser Ausführungen wird ein Verfahren zum Ausführen einer Elektroinstallation in einem Gebäude oder einem Teil eines Gebäudes geschaffen, welches folgende Schritte umfaßt:
a) ausgehend von einem Bauplan des Gebäudes bzw. dem Teil des Gebäudes wird anhand von individuellen Vorgaben seitens eines Kunden ein Ausführungsplan erstellt, aus dem die Art und die exakte Lage sämtlicher Installationspunkte, das sind Punkte für Schalter, Steckdosen etc., sowie der Verlauf und die Länge sämtlicher Leitungsabschnitte zwischen je zwei Installationspunkten entnehmbar sind, wobei die Installationspunkte und die Leitungsabschnitte jeweils mit einer eindeutigen Bezeichnung, z. B. einer Positionsnummer, versehen sind;
b) mit Hilfe des Ausführungsplans wird eine Stückliste erstellt für
   b1) die Leitungsabschnitte,
   b2) die an den Installationspunkten zu montierenden Bauteile in Form von Steckverbinderdosen;
c) es wird ein Bausatz erstellt, welcher aufweist:
   c1) mit Steckverbindern vorkonfektionierte Leitungsabschnitte entsprechend der Stückliste, und
   c2) individuell vorkonfektionierte Steckverbinderdosen für sämtliche Installationspunkte entsprechend der Stückliste,
   wobei sämtliche Steckverbinderdosen und Leitungsabschnitte entsprechend dem Ausführungsplan mit eindeutigen Bezeichnungen versehen sind; und
d) mit Hilfe des Ausführungsplans erfolgen die Montage der Teile des Bausatzes und die elektrische Verbindung zwischen den Enden der Leitungsabschnitte und den Steckverbinderdosen.

Im einzelnen läuft dieses Verfahren etwa folgendermaßen ab:

Ein Kunde, z. B. ein Bauherr eines Einfamilienhauses, ein Architekt, oder der Besitzer eines zu renovierenden oder zu sanierenden Hauses, bespricht mit einem Elektrofachmann anhand eines Bauplans die gewünschte Anlage. Der Kunde kann dem Fachmann z. B. mitteilen, wieviel Steckdosen an welchen Stellen in jedem Zimmer er wünscht, wieviel Deckenauslässe für Leuchten benötigt werden, in welcher Anzahl und an welchen Stellen sowie von welcher Art die Schalter sein sollen und dergleichen. Mit Hilfe eines Rechnerprogramms wird dann der üblicherweise von dem Architekten erstellte Bauplan erfaßt und auf einem Bildschirm dargestellt. Der Fachmann gibt dann die oben erwähnten Informationen bezüglich Umfang und Art der Teile der Elektroinstallation ein. Mit diesen Angaben erstellt dann das Rechnerprogramm den Ausführungsplan ohne weitere "manuelle" Arbeit. Die Ausgabe des Rechners umfaßt dann einen Grundriß jedes Geschosses des Gebäudes (wenn nur eine einzige Wohnung in einem Geschoß mit einer Elektroinstallation versehen werden soll, besteht die Ausgabe des Rechners natürlich nur in dem Grundriß dieser einzigen Wohnung), wobei in dem Grundriß sämtliche Installationspunkte gemäß ihrer Art und ihrer Lage eingezeichnet sind. Außerdem sind die Bemessungen für die Leitungsabschnitte zwischen den einzelnen Installationspunkten angegeben.

Die Ausgabe des Rechnerprogramms umfaßt weiterhin in einer bevorzugten Ausbildung der Erfindung außer dem Grundriß noch eine Wandabwicklung, beispielsweise eine getrennte Wandabwicklung für jedes Zimmer. In dieser Wandabwicklung sind dann durch entsprechende Symbole ebenfalls die Installationspunkte und die zu montierenden Bauteile (Steckverbinderdosen) eingetragen, außerdem die Bemaßungen für den Leitungsverlauf. Ferner finden sich im Grundriß und/oder jeder Wandabwicklung eindeutige Bezeichnungen, beispielsweise Positionsnummern, die jeden Leitungsabschnitt und jedes Installationspunkt-Bauteil eindeutig identifizieren.

Weiterhin liefert das Rechnerprogramm eine Stückliste, in der die einzelnen Leitungsabschnitte, vorzugsweise in Verbindung mit der Angabe von Leitungsart, Leitungslänge und z. B. des Zimmers, in welchem die Montage erfolgen soll, aufgeführt sind.

Diese Stückliste dient einerseits als Vorgabe für die im Fachbetrieb erfolgende Erstellung eines Bausatzes und andererseits auch zur späteren Orientierung für die "nicht besonders geschulte Person" (kurz: Nicht-Fachmann) bei der Ausführung der eigentlichen Installationsarbeit.

Anhand der Angaben in der Stückliste kann der Fachbetrieb die Teile des Bausatzes vorkonfektionieren, insbesondere die Leitungsabschnitte maßgenau zuschneiden, abisolieren und mit passenden Steckverbindern bestücken. Die Steckverbinderdosen für die einzelnen Installationspunkte sind z. B. Abzweigungsdosen, Schalterdosen, Steckdosen-Dosen und dergleichen. In der Regel wird jede solche Steckverbinderdose einen Steckplatz für eine zugehende und einen Steckplatz für eine abgehende Gruppe von Leitern eines üblichen Kabels aufweisen, beispielsweise Phasenleiter, Nulleiter und Schutzleiter. Zusätzlich wird jede Steckverbinderdose einen Steckplatz für die von einem Schalter, einer Steckdose, einem Verbraucher oder dergleichen, kommende Leitung aufweisen. Wie weiter unten noch ausgeführt werden wird, ist jede Steckverbinderdose in der Weise vorkonfektioniert, daß bei der Montage nur noch die an den entsprechenden Leitungsabschnitten befindlichen Steckverbinder gesteckt werden müssen, wodurch automatisch die richtigen Anschlußverbindungen entstehen.

Der gesamte Bausatz wird zusammen mit dem Ausführungsplan und der Stückliste in einem oder mehreren Behältern untergebracht, wobei in einer besonders günstigen Ausführungsform des erfindungsgemäßen Verfahrens diese Unterbringung des Bausatzes in der Weise erfolgt, daß ein Behälter mehrere getrennte, nacheinander in der Reihenfolge der Montage zugängliche Bereiche, z. B. Schichten, enthält. Am Bau wird dann dieser Behälter geöffnet, so daß der Nicht-Fachmann als erstes Zugang zu dem Ausführungsplan (Grundriß, Wandabwicklung), der Stückliste und ggf. zu einer Arbeitsanleitung erhält, und erst später dann Zugang zu den zu montierenden und verlegenden Teilen hat. Anhand der Pläne und den nacheinander zugänglichen Teilen der Anlage kann dann der Nicht-Fachmann zunächst die Rohinstallation und dann die Feininstallation ausführen.

Für die Rohinstallation werden zunächst die Installationspunkte und die Leitungsverläufe von den Plänen auf die Wände des Gebäudes übertragen, dann erfolgt das Aufstemmen der Aufnahmelöcher für die Steckverbinderdosen. Dann werden die Leitungen verlegt, die Enden werden zunächst lose in die Steckverbinderdosen eingelegt. Dann erfolgt die Steckverbindung der Leitungsenden mit den korrespondierenden Steckverbinderteilen in den Steckverbinderdosen. Da die Steckverbinderdosen und die Leitungsabschnitte jeweils vorkonfektionierte und auf Funktionstüchtigkeit überprüfte Teile sind, und da diese Teile außerdem entsprechend den Plänen mit Bezeichnungen (Positionsnummern) ausgestattet sind, sind Verwechslungen praktisch auszuschließen. Um mit Sicherheit auszuschließen, daß innerhalb einer Steckverbinderdose Verwechslungen zwischen den Steckverbindern an den Leitungsenden und den Steckplätzen innerhalb der Steckverbinderdose stattfinden, ist in einer besonders bevorzugten Ausführungsform der Erfindung vorgesehen, daß die Steckverbinder an den vorkonfektionierten Leitungsabschnitten einerseits und die vorkonfektionierten, jeweils mehrere Steckplätze aufweisenden Steckverbinderdosen andererseits eine gleiche mechanische, elektrische oder farbige Codierung enthalten, die nur eine einzige Verbindung zwischen einem Leitungsabschnitt-Steckverbinder in einer Steckverbinderdose und einem Steckplatz in dieser Steckverbinderdose zuläßt.

Wenn der Nicht-Fachmann bei der Herstellung der Steckverbindungen in den Steckverbinderdosen aus irgendeinem Grund unsicher sein sollte, welches Leitungsende zu welchem Steckplatz gehört, kann er die richtige Steckverbindung durch einfaches Ausprobieren aufspüren. Sobald der passende Steckplatz für einen gegebenen Steckverbinder an einem Leitungsabschnitt gefunden ist, ist sicher, daß die passende Verbindung hergestellt ist.

Nach dem Stecken der Steckverbinder in den einzelnen Steckverbinderdosen werden die Dosen verschlossen. Spezielle Ausführungsformen der Steckverbinderdosen gemäß der Erfindung sind weiter unten erläutert. Abhängig von der Art der Steckverbinderdosen, also entweder Abzweigdose, Schalterdose etc., erfolgt das Verschließen beispielsweise durch Aufschrauben eines durchgehenden, mit der Wand bündigen Deckels (bei einer Abzweigdose), oder eines Deckels, der eine Aufnahmeöffnung für eine handelsübliche Steckdose oder einen handelsüblichen Schalter aufweist. Diese Einfach- oder Mehrfachsteckdosen und Schalter (Ausschalter, Wechselschalter etc.) werden ebenfalls in mit Steckverbindern vorkonfektionierter Weise als Bestandteile des Bausatzes von der Fachfirma mitgeliefert. Die Fachfirma bringt an den Schaltern, Steckdosen etc. Steckverbinder an, die die gleiche Bauart haben wie die Steckverbinder in den einzelnen Steckverbinderdosen. Nach dem Verschließen der einzelnen Steckverbinderdosen mit den (geschlossenen oder mit Aufnahmeöffnung ausgestatteten) Deckeln ist die Rohinstallation abgeschlossen. Nach dem Ausführen der Putzarbeiten kann die Phase der Feininstallation beginnen. Hier werden die oben erwähnten vorkonfektionierten Schalter, Steckdosen etc. in den entsprechenden Aufnahmeöffnungen der verschlossenen Steckverbinderdosen montiert, nachdem der zu dem Schalter, der Steckdose etc. gehörige Steckverbinder in seinen Steckplatz im Inneren der Steckverbinderdose gesteckt ist.

Der Abschluß der gesamten Installation wird durch die Abnahme, durch eine hierzu befugte Person gebildet.

Die für den Nicht-Fachmann nunmehr mögliche Ausführung der Elektroinstallation in einem Gebäude bedeutet für den Nicht-Fachmann im Grunde genommen nur die Besprechung mit einem Planer anhand des vom Architekten angefertigten Gebäude-Grundrisses und die spätere Ausführung der Rohinstallation und der Feininstallation. Wie oben ausgeführt wurde, sind diese im Zuge der Rohinstallation und der Feininstallation vorzunehmenden Arbeiten so angelegt, daß keinerlei Risiko für falsche elektrische Anschlüsse besteht. Der fachmännische Teil der Arbeit erfolgt im Fachbetrieb und wird von fachlich geschultem Personal ausgeführt. Diese Arbeiten, d. h. das Zusammenstellen des Bausatzes und das Prüfen der Teile des Bausatzes, können natürlich auch weitestgehend automatisiert werden, insbesondere das Ablängen von Leitungskabeln der jeweils erforderlichen Art (dreiadrig, vieradrig etc.).

In einer speziellen Ausführungsform ist bei dem Verfahren zusätzlich vorgesehen, in den Ausführungsplan die Verlegung eines Informationsübertragungsbusses (im folgenden auch einfach: Bus) einzubeziehen, wobei dieser Bus mittels vorkonfektionierter Busleistungen über vorbestimmte Steckverbinderdosen geführt wird. Die Einbeziehung von Busleitungen zur Informationsübertragung zwischen verschiedenen Stellen innerhalb eines Gebäudes ermöglicht eine Zur-Verfügung-Stellung einer sehr vielseitig nutzbaren Anlage. Von einzelnen Sensoren, Schaltern und dergleichen kommende Informationssignale werden über den Bus übertragen, um von weiter unten noch näher zu erläuternden aktiven, busgesteuerten Aktorelementen verarbeitet zu werden.

Weiterhin nach gemäß dem ersten Aspekt dieser Ausführungen wird ein Bausatz für die Elektroinstallation eines Gebäudes oder einen Teil eines Gebäudes geschaffen. Der Bausatz kann vorzugsweise in Verbindung mit dem beschriebenen Verfahren eingesetzt, aber auch unabhängig davon verwendet werden. Er umfaßt:
a) Einen Ausführungsplan, aus dem die Art und die exakte Lage sämtlicher Installationspunkte, das sind Punkte für Schalter, Steckdosen etc., sowie der Verlauf und die Länge sämtlicher Leitungsabschnitte zwischen je zwei Installationspunkten entnehmbar sind, wobei die Installationspunkte und die Leitungsabschnitte jeweils mit einer eindeutigen Bezeichnung, z. B. einer Positionsnummer, versehen sind;
b) eine Menge von mit Steckverbindern vorkonfektionierten Leitungsabschnitten, jeweils mit Bezeichnung gemäß Ausführungsplan; und
c) eine Menge von Steckverbinderdosen für sämtliche Installationspunkte, jeweils mit Bezeichnung gemäß Ausführungsplan.

Bevorzugt umfaßt der Bausatz noch
d) Steckdosen, Schalter und dergleichen Geräte.

Mit diesen drei Elementen, nämlich Ausführungsplan, Leitungsabschnitts-Menge und Steckverbinderdosen-Menge, wird dem Nicht-Fachmann sämtliches Material an die Hand gegeben, damit er die planmäßige Installation eines Energieversorgungssystems eines Gebäudes oder einer Wohnung fehlerfrei ausführen kann. Die einzelnen Schritte der Ausführung der Installationsarbeiten wurden oben bereits erläutert. Wenn die Steckverbinderdosen mit den zwischen den Dosen verlegten Leitungsabschnitten installiert sind, werden an den dafür vorgesehenen Steckverbinderdosen Schalter, Steckdosen etc. angebracht. Diese Bauelemente sind im Fachbetrieb vorkonfektioniert und Bestandteil des gelieferten Bausatzes.

Die Art und Weise der elektrischen Verbindungen an jedem Installationspunkt hängt ab von Anzahl und der Art und Weise der an dem Punkt zusammentreffenden Leitungsenden.

Von Fachleuten im Fachbetrieb vorgenommene Konfektionierung der Steckverbinderdosen sollte aus ökonomischen Gründen natürlich mit einem möglichst einheitlichen Aufbau der Steckverbinderdosen der dazugehörigen Teile in möglichst kurzer Zeit erfolgen.

In einer bevorzugten Ausgestaltung des Bausatzes weist die Steckverbinderdose jeweils auf:
a) Bodenteile mit einer Kontaktplatte mit einer Matrix von Kontaktstellen, wobei bestimmte Reihen durchgängig elektrisch untereinander verbunden sind für den Anschluß an Phasenleiter, Nulleiter etc.;
b) eine Gruppe von passiven Schaltartelementen, die jeweils in Spaltenrichtung der Kontaktstellen-Matrix verlaufen und einzelne Verbindungen zu individuellen Reihen der Kontaktstellen-Matrix aufweisen und gegebenenfalls paarweise in Reihenrichtung benachbarte Kontaktstellen elektrisch miteinander verbinden, und die jeweils zur Aufnahme eines Steckverbinders dienen; und/oder alternativ zum Merkmal b),
c) eine Gruppe von aktiven Schaltartelementen (90, 102), die jeweils in Spaltenrichtung der Kontaktstellen-Matrix verlaufen und einzelne Verbindungen zu individuellen Reihen der Kontaktstellen-Matrix aufweisen, gegebenenfalls paarweise in Reihenrichtung benachbarte Kontaktstellen elektrisch miteinander verbinden und busgesteuerte Schaltfunktionen übernehmen, und die mit einem Mehrfachleiter-Informationsübertragungsbus in dem Bodenteil elektrisch verbunden sind;
d) ein Oberteil;
e) wobei zwischen Bodenteil und Oberteil Durchgangsöffnungen für durchgehende und abgehende Leitungsabschnitte ausgebildet sind.

Die Kontaktplatte wird in das Bodenteil eingeschnappt oder anderweitig befestigt. Die Kontaktplatte kann zusätzliche Befestigungsklammern aufweisen, um auf Profilschienen (speziell in Form von Hutschienen gemäß DIN EN 50022) aufgeschnappt werden zu können. Das Bodenteil ist seinerseits Bestandteil eines Gehäuses, welches einen Verbindungsblock aufnimmt, wodurch die gesamte Steckverbinderdose gebildet wird. Die so erhaltene Steckverbinderdose wird in der Wand oder vor der Wand montiert. Wird die Kontaktplatte auf der oben erwähnten Profilschiene montiert, wird sie zum Bestandteil einer Elektroverteilung. Nach der Montage der Steckverbinderdose werden auf die aktiven und/oder passiven Schaltartelemente die Steckverbinder an den Leitungsenden der zu- und abgehenden Leitung gesteckt. Durch farbige, mechanische oder elektrische Codierung von Schaltartelementen einerseits und Steckverbindern andererseits erfolgt eine eindeutige Zuordnung. Die einzelnen Adern der Leitungen sind in die Steckverbinder entsprechend der Schaltart zugentlastet eingesteckt. Nachdem die Leitungen eingelegt sind, wird das Oberteil aufgesetzt, um die Steckverbinderdose zu vervollständigen.

In der Einbauform im Elektroverteiler wird der aus Kontaktplatte, Schaltartelement und Steckverbinder gebildete Verbindungsblock durch eine übliche Verteilerabdeckung abgedeckt.

Aus wirtschaftlichen Gründen haben die Steckverbinderdosen nur zwei einheitliche Grundaufbauten, die die konventionelle Installationsart bzw. die Bustechnik abdecken, insbesondere sollten die Kontaktplatten einheitlich, für sämtliche in Frage kommenden Arten von konfektionierten Steckverbinderdosen sein. Für die üblichen Stromleitungen in Gebäuden sind jeweils drei Reihen der Kontaktstellen-Matrix der Kontaktplatten durchgehend miteinander verbunden (ein Phasenleiter, ein - Nulleiter und ein Schutzkontaktleiter). Für Drehstromanwendungen wird die Kontaktplatte mit der für den Drehstromanschluß erforderlichen Anzahl von Matrixkontakten in Reihenrichtung ausgeführt, wobei dann drei einzelne Phasenleiter, also insgesamt fünf durchgehende Reihen von Kontaktstellen der Matrix vorhanden wären. Die Schaltartelemente werden - in Spaltenrichtung der Matrix verlaufend - in die Kontaktplatte eingeschnappt. Die reihenweise Verbindung der Kontaktstellen der Matrix erfolgt z. B. durch Einsetzen durchgehender Kontaktmesser, wobei die Schaltartelemente dann entsprechende Gehäuseausnehmungen auf der Unterseite aufweisen, in die die Kontaktmesser eingreifen. Innerhalb der Schaltartelemente befinden sich Kontaktstifte, die zu nach außen weisenden Aufnahmeöffnungen führen, in welche die Adern der Leitungsenden passen.

Betrachtet man z. B. ein Ende eines von einem Ausschalter kommenden Leitungsabschnitts und ein Ende eines von einem Verbraucher (Lampe) kommenden Leitungsabschnitts, so erfolgt über die an diesen Leitungsabschnitt-Enden befindlichen Steckverbinder und die in den Steckverbinderdosen befindlichen Schaltartelemente eine elektrische Verbindung zweier Adern beider Leitungsabschnitte mit Schutzleiter und Nulleiter, eine Verbindung des Phasenleiters der Kontaktplatte mit dem Phasenleiter des Schalterkabels und eine Verbindung zweier in Reihenrichtung benachbarter Kontaktstellen für jeweils eine weitere Ader der Schalterleitung und der Lampenleitung. Diese letztgenannte Verbindung zwischen zwei in Reihenrichtung benachbarten Kontaktstellen erfolgt vorzugsweise durch ein kurzes Kontaktmesser, das in eine Aufnahmenut der Kontaktplatte eingesetzt wird. Diese einzelnen Kontaktmesser bilden mit entsprechenden Zwischensteckelementen die Schaltartelemente innerhalb der vorkonfektionierten Steckverbinderdosen. Die nach außen weisenden Seiten der Schaltartelemente enthalten Öffnungen, in die die Adern an den Leitungsenden passen. Zusätzlich sind an der nach außen weisenden Seite der Schaltartelemente farbige, mechanische oder elektrische Codierungen in einer bestimmten, eindeutigen Kombination angebracht, zu denen dann nur eine einzige farbige, mechanische oder elektrische Codierung an der Stirnseite des zugehörigen Steckverbinders am Leitungsende paßt. Durch diese "Codierung" ist ausgeschlossen, daß ein Steckkontakt zu einem nicht passenden Schaltartelement hergestellt wird.

In einer speziellen Ausgestaltung der Steckverbinderdose, die allerdings auch ohne planmäßige und vorkonfektionierte Installation gemäß dem beschriebenen Verfahren vorteilhaft ist, beinhaltet die Kontaktplatte der Steckverbinderdose zwei Gruppen von Reihen innerhalb der Kontaktstellen-Matrix, welche durchgehend miteinander verbunden sind. Die erste Gruppe enthält drei durchgehende Reihen für Phasenleiter, Nulleiter und Schutzleiter, die zweite Gruppe enthält fünf durchgehende Reihen für die Busleiter. Bei Drehstromanwendungen wird die Kontaktplatte mit den für den Drehstromanschluß erforderlichen Anzahl von Matrixkontakten in Reihenrichtung ausgeführt, wobei dann in der ersten Gruppe drei einzelne Phasenleiter, also insgesamt fünf durchgehende Reihen von Kontaktstellen der Matrix vorhanden wären.

Eine weitere Reihe der Kontaktstellen-Matrix ist für den Ausgang des busgesteuerten Aktorelements vorgesehen. In der Steckverbinderdose können neben den passiven Schaltartelementen die oben erläutert wurden, zusätzlich oder alternativ aktive Schaltartelemente gesteckt werden, beispielsweise in Form von Aktorelementen oder Sensorelementen. Aktorelemente enthalten z.B. einen Microprozessor oder dergleichen, der von dem Bus Information empfängt und verarbeitet. Die über den Bus übertragene Information beinhaltet in an sich bekannter Weise Adresseninformation und Dateninformation. Wenn ein durch die vom Bus kommende Information adressiertes Aktorelement die Information enthält, verarbeitet es diese Information z.B. in der Form, daß ein Relais oder ein Leistungs-Halbleiterbauelement aktiviert wird, um beispielsweise einen Antriebsmotor für eine elektrische Jalousie zu betätigen.

Die Verbindung der Busleiter in den einzelnen Steckverbinderdosen kann in der gleichen oder in ähnlicher Weise erfolgen, wie es oben für die Leitungsverbindungen erläutert wurde. Allerdings kann der Bus auch separat in konventioneller Weise verlegt werden.

In einer Ausführungsform der Steckverbinderdose können nebeneinander konventionelle Schaltartteile (passive Schaltartteile) und "busfähige" Schaltartteile, d.h. aktive Schaltartteile Platz haben.

Die passiven Schaltartelemente haben zwei Gruppen von Gehäuseausnehmungen, die erste Gruppe entspricht den durchgehenden Kontaktmessern für Phasenleiter, Nulleiter und Schutzleiter, die zweite Gruppe entspricht Kontaktmessern für den Bus. Bei den üblichen fünfadrigen Busleitungen sind dann fünf Kontaktmesser in der Kontaktplatte angeordnet.

In der Reihe für den Aktorelement-Ausgang werden in Reihenrichtung der von dem Aktorelement kommende Schaltdraht und benachbart der zu dem Verbraucher (z.B. zu dem oben erwähnten Elektromotor) führende Phasenleiter über ein kurzes Kontaktmesser in der Kontaktplatte mit dem Schaltartelement verbunden.

Die nach außen weisenden Seiten der Schaltartelemente enthalten Öffnungen, in die die in den Steckverbindern montierten Adern der Leitungsenden passen. Zusätzlich sind an der nach außen weisenden Seite der Schaltartelemente farbige, mechanische oder elektrische Codierungen in einer bestimmten, eindeutigen Kombination angebracht, zu denen dann nur eine entsprechende einzige Farbe, mechanische oder elektrische Codierung an der Stirnseite des Steckverbinders am Leitungsende paßt.

Auch die Codierung der aktiven Schaltartelemente und der dazugehörigen Steckverbinder wird wahlweise mit farbigen, mechanischen oder elektrischen Codierungen an den Stirnseiten realisiert.

Die busgesteuerten Sensorelemente sind solche aktiven Schaltartelemente, die auf die Kontaktmesser für die fünf Busleitungen gesteckt werden, um eine Verbindung zu dem Bus herzustellen. Auch die aktiven Schaltartelemente werden wie die passiven Schaltartelemente in Spaltenrichtung auf die Kontaktplatte aufgesteckt. Von einem busgesteuerten Sensorelement abgehende Leitungen führen z.B. zu einem Helligkeitsfühler. Die entsprechende Information wird über die Leitungen zu dem Sensorelement geleitet und dort in Businformation umgesetzt, die dann auf den Bus gesendet wird. An einer anderen Stelle wird dann diese Information von einem durch den Adressenteil der Businformation adressierten Aktorelement empfangen und verarbeitet, beispielsweise in der Form, daß ein Motor für eine Gruppe elektrisch betätigter Jalousien in Gang gesetzt wird. Man erkennt, daß der Einsatz der Bustechnik eine Vielseitigkeit einer elektrischen Installation ermöglicht, die mit konventionellen Mitteln so nicht erreichbar wäre.

Durch die beschriebene Ausgestaltung der Steckverbinderdose läßt sich eine busgesteuerte Anlage übersichtlich planen und installieren.

Um die Montage zu erleichtern, ist vorsugsweise vorgesehen, daß die Durchgangsöffnungen durch paarweise zusammengehörige halbkreisförmige Ausnehmungen im Bodenteil und im Oberteil gebildet sind. Besonders bevorzugt werden die Durchgangsöffnungen durch Sollbruchstellen in einer Seitenwand der Steckverbinderdose definiert. Je nach erforderlicher Anzahl von Durchgangsöffnungen kann eine entsprechende Anzahl von halbkreisförmigen Öffnungen durch Ausbrechen von Wandbereichen an den Sollbruchstellen gebildet werden. Die Leitungsenden mit den daran befindlichen Steckverbindern werden zunächst in die nach außen weisenden halbkreisförmigen Öffnungen des Bodenteils eingelegt, nach dem Herstellen der einzelnen Steckverbindungen zwischen den Steckverbindern an den Leitungsenden und den Schaltartteilen auf der Kontaktplatte wird dann das rahmenförmige Oberteil auf das Bodenteil aufgeschnappt. Die Oberkante des Oberteils bildet die Anlagefläche für einen Verschlußdeckel, der z. B. aufgeschraubt wird. Die Oberseite des Verschlußdeckels ist bündig mit der Wandoberfläche, d. h. der Oberfläche des Verputzes.

Gemäß einem zweiten Aspekt betreffen die Ausführungen einen Doseneinsatz für Schalterdosen zur Aufnahme von elektrischen Geräten wie Schalter, Steckdosen, Dimmern und dergleichen.

Steckdosen, Schalter, Dimmer und ähnliche Geräte der Gebäude-Elektroinstallation werden üblicherweise unter Putz installiert. Zu diesem Zweck werden an den betreffenden Installationspunkten genormte Schalterdosen mit seitlichen Öffnungen für ankommende und abgehende Leitungsdrähte und Kabel eingebaut.

Im einfachsten Fall seines einpoligen Schalters für z. B. eine Deckenlampe werden die Leitungsdrähte zwischen der Lampe und einer Abzweigdose mit jeweils einem Ende in die eingebaute Schalterdose geführt. Die abisolierten Enden der Leitungsdrähte werden dann an der Rückseite des Schalter-Bauteils angeschraubt oder eingeklemmt. Ähnliche Arbeiten werden bei der Montage von Steckdosen und dergleichen ausgeführt.

Obschon das Anschließen von Steckdosen, Schaltern und dergleichen ebenso wie das mechanische Anbringen dieser Geräte an den Schalterdosen vom Fachmann binnen kurzer Zeit ausgeführt werden kann, tun sich ungeschulte Personen bei diesen Arbeiten schwer. Dies gilt insbesondere für etwas kompliziertere Anschlußarbeiten, beispielsweise bei Wechselschaltern und dergleichen.

Die oben angesprochenen Probleme treten nicht nur bei der Erstinstallation von Steckdosen, Schaltern und dergleichen auf, sondern auch z. B. dann, wenn ein Schalter durch einen Dimmer ersetzt werden soll. Zunächst muß die Verankerung des Schalters gelöst werden, um anschließend die Leitungen abklemmen zu können. Dann müssen die Leitungen - elektrisch richtig - an dem Dimmer angebracht werden, bevor dieser festgeschraubt wird.

Bei dem zweiten Aspekt der Ausführungen besteht die Aufgabe, einen Doseneinsatz für Schalterdosen zur Aufnahme von elektrischen Geräten wie Schaltern, Steckdosen, Dimmern und dergleichen anzugeben, der eine sehr schnelle Fertigmontage der genannten elektrischen Geräte auch für den Laien ermöglicht.

Gelöst wird diese Aufgabe bei einem Doseneinsatz für Schalterdosen durch einen Steckverbinder mit mehreren Kontaktelementen, die jeweils mit Leitungsanschlußelementen elektrisch verbunden sind, die ihrerseits mit elektrischen Leitungen verbunden sind.

Bei diesem Doseneinsatz werden die zu der Schalterdose hinführenden und von der Schalterdose weggehenden Leitungsdrähte mit den Leitungsanschlußelementen verbunden. Da diese mit den Kontaktelementen des Steckverbinders verbunden sind, kann beispielsweise ein Schalter mühelos mit Hilfe eines passenden Steckverbinders montiert werden. Die beiden Steckverbinder brauchen lediglich zusammengesteckt zu werden, damit die elektrischen Verbindungen richtig zustande kommen. Zwar sind - ähnlich wie bei den üblichen Installationsarbeiten - auch bei dem Doseneinsatz ähnliche Installationsarbeiten notwendig, jedoch lassen sich diese Arbeiten in einer bevorzugten Ausführungsform des Doseneinsatzes dadurch erleichtern, daß die Kontaktelemente und/oder die Leitungsanschlußelemente eine Codierung, insbesondere eine farbliche Codierung haben. Die Kabelenden, die eine der VDE-Norm entsprechende farbliche Isolierstoffhülle aufweisen, werden mit entsprechend farblich gestalteten Anschlußelementen des Steckverbinders verbunden.

Vorzugsweise gehört zu jedem Kontaktelement des Steckverbinders ein Paar von Leitungsanschlußelementen, wobei die Anschlußelemente auf einander diametral gegenüberliegenden Seiten des Kontaktelements liegen. Bei einem typischen Doseneinsatz sind z. B. fünf Reihen von Leitungsanschlußelement-Paaren mit jeweils einem mittigen Kontaktelement vorhanden. Auf der einen Seite der Kontaktelemente dienen die Leitungsanschlußelemente für ankommende Leitungen, auf der anderen Seite dienen sie zum Anschließen von abgehenden Leitungen.

Die Leitungsanschlußelemente sind bevorzugt als einstückige Stanzteile ausgebildet. Sie werden in Ausnehmungen des aus Isolierstoff bestehenden Doseneinsatzes eingesetzt oder werden beim Herstellen des Doseneinsatzes in diesen eingeformt. Die Leitungsanschlußelemente können bevorzugt mit Verriegelungselementen ausgestattet sein, um die abisolierten Leitungsdrähte durch bloßes Einstecken zu halten.

Die Endmontage der elektrischen Geräte erfolgt dann in einfacher Weise so, daß die mit entsprechenden Steckverbindern ausgestatteten Geräte, beispielsweise Steckdosen, Schalter etc. durch Stecken elektrisch angeschlossen und dann in üblicher Weise mechanisch befestigt werden. Ein Austausch defekter oder aus anderen Gründen zu erneuernder elektrischer Geräte gestaltet sich extrem einfach.

Besonders bevorzugt gelangt der Doseneinsatz zur Anwendung bei der Gebäude-Elektroinstallation mit Hilfe vorkonfektionierter Leitungen. Bei diesem, Installationssystem werden vom Fachbetrieb Abzweigdosen, Schalterdosen, elektrische Geräte (Schalter, Dimmer etc.), Leitungen und weitere Hilfsmittel vorbereitet, die dann vom Nicht-Fachmann installiert werden. Um z. B. von einer Abzweigdose eine Leitung zu einem Schalter für eine Lampe zu installieren, wird die Kabelverbindung zwischen der Abzweigdose und der Schalterdose als vorkonfektioniertes Kabel geliefert, wobei an einem Kabelende ein Steckverbinder angebracht ist, mit dessen Hilfe die elektrische Verbindung in der Abzweigdose hergestellt wird. Die Leitungsdrähte am anderen Kabelende werden dann vor Ort abisoliert und mit den Leitungsanschlußelementen des erfindungsgemäßen Doseneinsatzes verbunden. In den Steckverbinder dieses Doseneinsatzes wird dann ein komplementärer Steckverbinder des Schalters eingesteckt. Dieser vorkonfektionierte Schalter mit dem dazugehörigen Steckverbinder wurde vorher vom Fachbetrieb vorbereitet. Durch die farbliche Codierung der Leitungsanschlußelemente in dem erfindungsgemäßen Doseneinsatz ist stets die richtige elektrische Verschaltung gewährleistet. Am Schalter selbst braucht der Nicht-Fachmann keine Arbeiten mehr auszuführen, außer den daran angebrachten Steckverbinder in den passenden Steckverbinder des Doseneinsatzes einzustecken.

Gemäß einem dritten Aspekt betreffen die Ausführungen einen Steckverbinder, insbesondere für den Einsatz bei der oben erläuterten Gebäude-Elektroinstallation.

Steckverbinder dienen im Bereich der Elektrotechnik und Elektronik zum schnellen und "richtigen" Verbinden zweier elektrischer Leitungen. Die üblichen Steckverbinder haben mehrere Kontakte, so daß mehrere Leitungen gleichzeitig durch den Steckvorgang miteinander verbunden werden.

Steckverbinder sind in ungezählten Ausführungsformen bekannt. Bei den üblichen Steckern für elektrische Stromleitungen (220 Volt) sind in einem in der Regel zweiteilig ausgeführten Isolierstoffgehäuse zwei Kontaktstifte verrastet gelagert, wobei die vorderen Enden der Kontaktstifte von dem Isolierstoffgehäuse abstehen und die hinteren Enden der Kontaktstifte an die Adern von Leitungsdrähten eines üblichen Kabels angelötet oder angeschraubt sind. Im Bereich der Leitungseinführöffnung befindet sich innerhalb des Isolierstoffgehäuses eine Zugentlastungseinrichtung, beispielsweise in Form einer Klemme.

Die oben beschriebenen Steckverbinder dienen im täglichen Leben zum Anschließen elektrischer Geräte an das 220-Volt-Netz.

Außerdem gibt es speziell ausgebildete Steckverbinder für den Bereich der Kfz-Elektrik, der Elektronik, der Hochfrequenztechnik und dergleichen.

Es soll speziell auf Steckverbinder für die Gebäude-Elektroinstallation Bezug genommen werden.

Anders als bei den üblichen 220-Volt-Steckern an Netzleitungen von Elektrogeräten und dergleichen gibt es elektrische Verbindungseinrichtungen, die nach einer erstmaligen Kontaktherstellung zwischen den zu verbindenden Leitungspaaren, wenn überhaupt, dann nur noch sehr selten gelöst werden. Elektrische Verbindungen, die auf Dauer angelegt sind, weil sie überhaupt nicht oder nur sehr selten gelöst werden müssen, werden in der Regel durch Verlöten oder mit Hilfe von Lüsterklemmen ausgeführt. Dies ist einerseits kostengünstiger als eine Verbindung mit Hilfe von Steckverbindungen, hat aber den Nachteil, daß Lötarbeiten oder das Ausführen von Schraubarbeiten bei Lüsterklemmen relativ aufwendig ist. In jedem Fall muß die solche Arbeiten ausführende Person geschult sein und genau wissen, welche Leitungen miteinander zu verbinden sind.

Bei dem dritten Aspekt besteht die Aufgabe, einen Steckverbinder anzugeben, der im Vergleich zu konventionellen Steckverbindern einfacher aufgebaut ist und sich deshalb insbesondere dort einsetzen läßt, wo einerseits übliche Steckverbinder zu teuer sind und andererseits von Hand ausgeführte Anschlußarbeiten zu aufwendig sind.

Gelöst wird diese Aufgabe durch einen Steckverbinder mit einem Isolierstoffgehäuse, von dem die Aderenden der in das Isolierstoffgehäuse eingeführten Leitungsdrähte als Steckkontaktstifte abstehen.

Im einfachsten und bevorzugten Fall enthält das Isolierstoffgehäuse eine Reihe von Leitungseinführöffnungen, die mit zugehörigen Aufnahmekammern in axialer Richtung der einzelnen Leitungsdrähte fluchten, folglich auch mit den von dem Gehäuse im montierten Zustand abstehenden Enden der Adern der Leitungsdrähte. Der Mittenabstand der einzelnen Leitungseinführöffnungen bestimmt damit den Mittenabstand der als Steckkontaktstifte fungierenden Aderenden.

Mit Hilfe des beschriebenen Steckverbinders lassen sich - unter Einsatz komplementär ausgebildeter Buchsen - insbesondere solche Anschlußarbeiten schnell ausführen, bei denen einzeln von Hand ausgeführte Verbindungen zwischen Paaren von Leitungen zu viel Zeit beanspruchen, und bei denen konventionelle Steckverbinder zu teuer sind. Bei den beschriebenen Steckverbindern entfallen die Anschlußarbeiten zum Verbinden der bei konventionellen Verbindern üblichen separaten Steckkontaktstifte mit den Aderenden der Leitungsdrähte des Kabels.

Es brauchen nur die einzelnen Leitungsdrähte eines Kabels abisoliert zu werden, um die Enden der blanken Adern in das Isolierstoffgehäuse einstecken zu können. An dem Isolierstoffgehäuse kann sich eine farbliche oder anderweitig ausgebildete Codierung befinden, durch die festgelegt wird, welche Adern (Schutzleiter, Nulleiter, Phasenleiter) in welche Leitungseinführöffnungen des Isolierstoffgehäuses gehören. Die zu den Steckverbindern komplementären Steckverbinder-Buchsen sind entsprechend verschaltet. Der Steckverbinder bietet ein kostengünstiges Hilfsmittel zur Ausführung einer der oben erläuterten Elektroinstallation mit Hilfe vorkonfektionierter Leitungen. Die Vorarbeiten, nämlich das Vorkonfektionieren der Stecker und Buchsen können vom Fachmann ausgeführt werden. Die eigentliche Montage kann dann vom Laien vorgenommen werden, und zwar nicht nur der "mechanische" Teil der Elektroninstallation, sondern auch der elektrische, da mit Hilfe der mit den Steckverbindern vorkonfektionierten Kabeln die Elektroarbeiten nur darin bestehen, die Steckverbinder in die dazu passenden Buchsen einzustecken.

Da bei dem Steckverbinder die blanken, starren Kabelenden selbst als Steckkontaktstifte fungieren, ist der Steckverbinder in seiner Herstellung natürlich wesentlich billiger als konventionelle Steckverbinder. Da die blanken Aderenden sich nicht so "glatt" stecken lassen wie speziell geformte Steckkontaktstifte, eignet sich der Steckverbinder vornehmlich für solche Verbindungen, die auf Dauer ausgelegt sind.

In einer bevorzugten Ausführungsform des Steckverbinders weist das Isolierstoffgehäuse mindestens eine Leitungseinführöffnung zum Einführen eines abisolierten Endes oder mehrerer Enden eines bzw. mehrerer Leitungsdrähte eines Kabels und eine oder mehrere Aufnahmekammern auf, aus denen die Enden der Adern der Leitungsdrähte als Steckkontaktstifte herausragen. Wie erwähnt, fluchten die Leitungseinführungsöffnungen und die Aufnahmekammern miteinander entsprechend einer Geraden, die der Längsachse des Leitungsdrahts entspricht. In einer nicht ganz so günstigen Ausführungsform können aber die Enden der Adern der Leitungsdrähte auch abgewinkelt sein gegenüber den in das Gehäuse eingeführten Leitungsdrähten.

Wie oben geschildert, lassen sich die Steckverbinder mühelos an die einzelnen Leitungsdrähte eines Kabels anschließen. Der Isoliermantel eines Kabels wird in einer gewissen Entfernung vom Kabelende entfernt, dann werden die Enden der einzelnen Leitungsdrähte abisoliert, so daß die vorzugsweise aus starrem, massivem Kupferdraht bestehenden Aderenden freiliegen, die dann in die entsprechenden Leitungseinführöffnungen des Isolierstoffgehäuses eingeführt werden. Das Isolieren erfolgt so weit, daß die Enden der in das Gehäuse eingesteckten Leitungsdrähte weit genug von dem Gehäuse abstehen.

Um insbesondere bei vorkonfektionierten Kabeln zu vermeiden, daß die an einem oder an beiden Kabelenden angebrachten Steckverbinder abrutschen oder ihre Lage in bezug auf die Enden der einzelnen Adern ändern, kann für jeden Leitungsdraht eine Verriegelungseinrichtung vorhanden sein. In einer bevorzugten Ausführungsform besteht die Verriegelungseinrichtung aus einer Federstahl-Verriegelungsscheibe, die sich zwischen der betreffenden Leitungseinführöffnung und der dazugehörigen Aufnahmekammer befindet. Das blanke Aderende wird durch die Leitungseinführöffnung und die Öffnung der Verriegelungsscheibe hindurch in und durch die Aufnahmekammer eingeschoben, bis das Ende der Ader des Leitungsdrahts in dem gewüschten Maß von der betreffenden Seite des Isolierstoffgehäuses absteht. Die Verriegelungseinrichtung dient als Zugentlastung, so daß auch bei Ausübung von Zug seitens des Kabels die vom Isolierstoffgehäuse abstehenden Aderenden ihre Lage nicht verändern.

Der beschreibene Steckverbinder ist grundsätzlich bei praktisch sämtlichen Arten von Leitungsdrähten einsetzbar. Allerdings kann es bei gelitzten Adern schwierig sein, die abisolierten Leitungsdrähte in dem Isolierstoffgehäuse zu plazieren. In der Regel werden die Enden gelitzt ausgeführter Adern nicht genug Widerstand beim Steckvorgang bieten können. Zur Abhilfe, könnte man daran denken, die Enden der gelitzten Adern durch Lot oder dergleichen zu versteifen. Besonders bevorzugt werden jedoch solche Leitungsdrähte eingesetzt, die aus massivem Metall, insbesondere Kupfer bestehen. Zur Gewährleistung der benötigten Steifigkeit für den Steckvorgang wird ein Aderdurchmesser von 0,5 mm und mehr bevorzugt.

Um beispielsweise bei einem mit dem Steckverbinder vorkonfektionierten Kabel die von einer Seite des Steckverbinders abstehenden Aderenden vor einem Verbiegen, Abbrechen oder anderweitigen Beschädigungen zu schützen, ist vorgesehen, daß das Isolierstoffgehäuse eine die vorstehenden Aderenden mit Abstand umgebende Umfangs-Schutzwand aufweist. Diese Schutzwand verhindert, daß die einzelnen Aderenden unbeabsichtigt beschädigt werden. Die Umfangs-Schutzwand kann auch dazu genutzt werden, durch entsprechende Ausbildung des komplementären Steckverbinders dafür zu sorgen, daß eine elektrische Verbindung nur mit zueinander passenden Steckverbindern zustande kommt.

Bei den bevorzugt ausgebildeten Steckverbindern sind mindestens fünf Öffnungen für Leitungsdrähte vorgesehen. Die Anzahl kann aber auch größer sein, damit z. B. einzelne Steckplätze frei bleiben können und dadurch die Möglichkeit eröffnet wird, mit Hilfe ein und derselben Art von Steckverbindern unterschiedliche Verbindungsarten zu realisieren.

Gemäß einem vierten Aspekt betreffen die Ausführungen eine Kontaktplatte für eine Steckverbinderanordnung.

Diese Kontaktplatte ist insbesondere anwendbar in Verbindung mit dem oben erläuterten Elektroinstallationssystem. Die Kontaktplatte ist allerdings nicht auf ein solches Installationssystem beschränkt, sondern, die hier offenbarten wesentlichen Elemente einer Kontaktplatte können auch bei Kontaktplatten für Steckverbinderanordnungen genutzt werden, die für andere Zwecke eingesetzt werden. Steckverbinderanordnungen sind in unterschiedlichsten Ausführungsformen bekannt, sie dienen in erster Linie zum vorübergehenden paarweisen Verbinden von zwei Leiterenden oder zweier Gruppen von Leiterenden. In einem einfachen Fall wird z. B. ein Steckerstift eines Leiters in eine Steckbuchse eines anderen Leiters eingeschoben. Üblicherweise werden mehrere Leiterpaare gleichzeitig verbunden, so z. B. bei den üblichen 220-Volt-Steckverbindern im Haushalt.

Es gibt aber auch Steckverbinderanordnungen mit einer Kontaktplatte, die mehrere Steckplätze enthält, wobei unterschiedlich verdrahtete Steckverbinder auf ihnen zugewiesene Steckplätze zu stecken sind, um bestimmte Verschaltungsarten zu realisieren. Bei dem oben angesprochenen Elektroinstallationssystem wird von derartigen Steckverbinderanordnungen Gebrauch gemacht. An bestimmten Installationspunkten sind Abzweigdosen vorgesehen. Abzweigdosen sind über Kabel miteinander verbunden, wobei die mit Steckverbindern vorkonfektionierten Kabelenden an speziell dafür vorkonfektionierte Steckplätze auf der Kontaktplatte angeschlossen werden. Von den Abzweigdosen erfolgt dann die elektrische Verbindung mit beispielsweise Steckdosen, Schaltern etc. ebenfalls über vorkonfektionierte Kabel. Mit diesem Elektroninstallationssystem können Installationsarbeiten auch vom Nicht-Fachmann ausgeführt werden. Zu diesem Zweck wird ein Installationsplan erstellt, die benötigten Teile werden vom Fachbetrieb vorkonfektioniert, die vorkonfektionierten Teile werden vom Nicht-Fachmann installiert, und die gesamte Anlage wird dann vom Fachmann geprüft und abgenommen.

Bei Wohnungen und Einfamilienhäusern besitzen die Abzweigdosen, Stecker, Steckdosen etc. ausschließlich elektrische Leitungen für Schutzleiter, Nulleiter und Phasenleiter sowie Schaltleiter.

Es gibt aber auch bereits modernere Elektroinstallationen, die in Verbindung mit einem Informationsbus arbeiten. Über diesen Informationsbus werden gemäß einem genormten Protokoll Informationssignale zu den verschiedenen Installationspunkten übertragen, und diese Information wird dann umgesetzt, beispielsweise in Signale zum Einschalten, Ausschalten, Dimmern, Betätigen einer Jalousie etc.

Die Informationsübertragung mit Hilfe eines Informationsbusses kann mit Hilfe elektrischer Leitungen (Niederspannung) erfolgen. Möglich ist aber auch eine Übertragung der Informationssignale über optische Leitungen, sogenannte Lichtleiter (LL) oder Lichtwellenleiter (LWL).

Bei dem vierten Aspekt der Ausführungen besteht die Aufgabe, eine Kontaktplatte für eine Steckverbinderanordnung zu schaffen, die für Bauteile geeignet ist, die elektrische, optische oder sowohl elektrische als auch optische Signale führen.

Erreicht wird dies bei einer Kontaktplatte für Steckverbinderanordnungen mit einer Grundplatte mit vorzugsweise rechteckigem Grundriß, in der mehrere in Reihenrichtung verlaufende elektrische Kontaktmesser gehaltert sind, mit mehreren in Spaltenrichtung verlaufenden Steckplätzen, auf die Bauteile aufsetzbar sind, von denen zumindest einige Bauteile optische Signale führen, wobei in der Grundplatte mehrere Lichtleiterfasern eingebettet sind, deren Lichteintritts- und Lichtaustrittsenden von der Oberseite der Grundplatte her zugänglich sind.

Das ist eine Kontaktplatte, bei der elektrische und optische Strom- bzw. Signalverbindungen zur Verfügung stehen. Über die in die Grundplatte eingebetteten Lichtleiter können extern zugeführte optische Signale innerhalb der Steckverbinderanordnung weitergeleitet werden. Die Kontaktplatte eignet sich besonders für Systeme mit Informationsbus. Der Bus kann die Informationssignale als optische Signale, aber auch als elektrische Signale übertragen. Das auf die Kontaktplatte aufgesetzte Bauteil kann im Fall eines elektrischen Busses die elektrischen Signale umwandeln in optische Signale, die dann an andere Bauteile auf der Kontaktplatte weitergeleitet und dort weiterverarbeitet werden.

Die Kombination von elektrischen und optischen Verbindungen auf einer Kontaktplatte hat den erheblichen Vorteil, daß praktisch keine Beschränkungen dahingehend berücksichtigt werden müssen, ob die auf die Kontaktplatte aufgesetzten Bauteile, z. B. übliche elektrische Steckverbinder, Sensoren, Aktoren und dergleichen, ausschließlich elektrisch arbeiten, gemischt elektrisch/optisch arbeiten oder ausschließlich optisch arbeiten. Auf jeden Fall steht durch die Kombination elektrischer und optischer Signale elektrische Energie zur Verfügung, mit der die auf die Kontaktplatte aufgesetzten Bauteile ggf. arbeiten können. Wegen der geringen Leistung in den üblichen elektronischen Bauelementen können diese Bauelemente von den üblichen Netzleitungen elektrische Leistung mit Hilfe eines kleinen Netzteils beziehen.

Ein erheblicher Vorteil der optischen Verbindungen innerhalb der Kontaktplatte ist darin zu sehen, daß die im Inneren der Kontaktplatte geführten optischen Signale nicht beeinflußt werden von den elektrischen Signalen. Würde man die Informationssignale beispielsweise in Form von 5-Volt-Impulsen mit Hilfe von Kupferdrähten innerhalb der Kontaktplatte übertragen, so könnten diese Signale möglicherweise erheblich gestört werden durch die Netzspannungssignale (220 Volt) in den Kontaktmessern auf der Kontaktplatte.

Unabhängig davon, ob bei Verwendung eines Bussystems die Bus-Informationssignale als elektrische oder optische Signale übertragen werden, können im Bereich der Kontaktplatte sämtliche Informationssignale als optische Signale übertragen werden, ggf. nach Umwandlung mit Hilfe lichtemittierender Dioden oder dergleichen.

Wegen der kurzen Übertragungsstrecken innerhalb einer Kontaktplatte brauchen die in die Grundplatte eingebetteten Lichtleiter keinen besonderen Qualitätsanforderungen zu genügen. Es können kostengünstige Lichtwellenleiter verwendet werden, beispielsweise die üblichen Glasfasern, die eine Stärke von ca. 50 µm besitzen. Außerdem kommen noch transparente Kunststoffasern in Betracht, beispielsweise aus dem hierfür üblichen Material. Damit die beiden Enden der Lichtleiterabschnitte von der Oberseite der Grundplatte her zugänglich sind, müssen die in die Grundplatte eingebetteten Lichtleiter an ihren Enden gebogen werden. Hierzu kommt ein Krümmungsradius von einigen Millimetern in Betracht. Selbst bei derartigen kleinen Krümmungsradien gibt es kaum Signalverluste im Bereich der Kontaktplatte. Das Einkoppeln und Auskoppeln von Signalen in die Lichtleiter bzw. aus den Lichtleitern erfolgt mit Hilfe von optoelektronischen Wandlerelementen (Leuchtdioden, Laserdioden, Phototransistoren etc.), die im Boden der einzelnen Bauelemente angeordnet sind.

Der Mechanismus der Übertragung optischer Signale in faserförmigen Lichtleitern ist bekannt. Durch Lichtbrechung und/oder Totalreflexion wird das optische Signal im Inneren des Lichtleiters gehalten. Die Lichtleiter können aus transparentem Kunststoff und in die vorzugsweise aus nicht-transparentem Material bestehende Grundplatte eingeformt sein. Dieses Einformen geschieht im Zuge der Fertigung der Grundplatten. Die von Länge zugeschnittenen und jeweils zu einem U-förmigen Teil gebogenen Lichtleiter werden in die Form eingesetzt, nach Schließen der Form werden die Lichtleiter mit dem Material der Grundplatte umspritzt. Man kann die Enden beim Spritzvorgang auch etwas über die Oberseite der Grundplatte vorstehen lassen. Wenn man die Enden über die Oberseite der Grundplatte etwas vorstehen läßt, besteht der Vorteil, daß bei aufgesetzten Bauelementen ein seitlichen Einstreuen von Licht in dem Koppelbereich zwischen Faserende und Bauteil praktisch unterbunden wird. Dabei muß man natürlich darauf achten, daß das Maß des Abstands der Faserenden über die Oberseite der Grundplatte übereinstimmt mit dem Maß, in welchem das am Boden des Bauteils befindliche optische Koppelelement von der Grundfläche des Bauteils zurückspringt. Aus fertigungstechnischen Gründen kann es bevorzugt werden, wenn die Lichteintritts- und Lichtaustrittsflächen mit der Oberseite der Grundplatte fluchten. Das Einstreuen von Fremdlicht kann auch dadurch unterbunden werden, daß die Lichteintritts- und Lichtaustrittsenden der Lichdeiterfasern etwas unter die Oberseite der Grundplatte versenkt sind. Dabei besteht möglicherweise aber die Gefahr, daß sich etwas Schmutz in den dann vorhandenen Löchern der Grundplatte ansammelt.

Bei Standard-Ausführungsformen ist es günstigsten, wenn die Lichtleiter jeweils mittig zwischen zwei benachbarten Kontaktmessern (oder den dafür vorgesehenen Halterungen) verlaufen. Eine solche Anordnung ist insbesondere für die Massenfertigung vorteilhaft. Allerdings brauchen nicht jeweils einzelne Leiter mittig zwischen den Kontaktmessern angeordnet zu werden. Es können auch mehrere Lichtleiter parallel zueinander gruppenweise zwischen zwei benachbarten Kontaktmessern verlaufen. Man kann auch ganze Faserbündel statt einzelner Lichtleiterfasern vorsehen.

Die am meisten zum Einsatz gelangende Ausführungsform der Kontaktplatte enthält Lichtleiterfasern, die in Reihenrichtung verlaufen, also parallel zu den Kontaktmessern. Keineswegs ausgeschlossen sind aber Ausführungsformen, bei denen die Lichtleiterfasern in Spaltenrichtung oder diagonal verlaufen. Diese Ausführungsform kommt insbesondere für die von Hand vorgenommene Bestückung der Kontaktplatte mit Lichtleiterfasern in Betracht. Durch die individuelle "Verlegung" einzelner Lichtleiterfasern können praktisch beliebige optische Verbindungen zwischen beliebigen Punkten der Kontaktplatte hergestellt werden.

In der Praxis erfolgt das individuelle Bestücken einer Kontaktplatte dann vorzugsweise derart, daß eine Kontaktplatte bereitgestellt wird, in der an vorbestimmen Matrixpunkten vorgebohrte Aufnahmelöcher für Lichtleiterfaserenden ausgebildet sind. Dann wird ein Ende einer Lichtleiterfaser in eine erste Bohrung eingeschoben (Ausgangspunkt), das andere Ende der entsprechend abgelängten Lichtleiterfaser wird dann in eine zweite Bohrung eingeführt (Zielpunkt). Nachdem diese "Verdrahtung" abgeschlossen ist, wird die Unterseite der so bestückten Kontaktplatte mit Hilfe einer entsprechenden Form mit Kunststoff umspritzt, so daß die Lichtleiterfasern fest an ihren Stellen sitzen bleiben. Will man die einzelnen Lichteintritts- und Lichtaustrittsenden der Lichtleiterfasern ein Stück über die Oberfläche der Grundplatte vorstehen lassen, so wird beim Bestücken der Grundplatte mit Lichtleiterfasern diese mit ihrer Oberseite in einem bestimmten Abstand von einer Referenzebene angeordnet. Die Enden der Fasern werden dann einfach bis zum Anschlag in die entsprechenden Bohrungen eingesetzt, und werden auf der Oberseite der Grundplatte von an dieser angeformten Kunststoffkragen aufgenommen.

Um verschiedene Bauteile (mit verschiedenen Funktionen) an einen Lichtleiteranschluß zu koppeln, sieht eine Weiterbildung vor, daß sämtliche Lichtleiter mit einem Ende in einem Steckplatz münden, die anderen Enden der Lichtleiter aber an unterschiedlichen Steckplätzen münden. Durch diese Maßnahme lassen sich verschiedenste Bauelemente optisch miteinander koppeln.

Möglich ist auch eine Ausführungsvariante, bei der die Lichteintrittsenden eines Faserbündels von einem Ausgangspunkt ausgehen, während die einzelnen Fasern zu verschiedenen Zielpunkten führen. Somit können von einem "Sendepunkt" die gleichen Signale gleichzeitig zu verschiedenen "Empfangspunkten" gesendet werden.

Im folgenden werden Ausführungsbeispiele der Erfindung anhand der Zeichnungen erläutert. Es zeigen:
- Fig. 1: ein Grundriß einer Geschoßwohnung, wobei in zwei Zimmern dieser Geschoßwohnung Symbole für eine Elektroinstallation dargestellt sind;
- Fig. 2: eine Wandabwicklung des Zimmers 1 aus Fig. 1 mit Ausführungsplan für die Montage von Steckverbinderdosen und Leitungsabschnitten;
- Fig. 3: einen Auszug aus einer Stückliste für Teile, die bei der Teil-Elektroinstallation gemäß Fig. 2 benötigt werden;
- Fig. 4: eine Darstellung eines dreiadrigen Leitungsabschnitts mit aufgeklebter Bezeichnung (Positionsnummer) und endseitig vorkonfektionierten Steckverbindern;
- Fig. 5: eine perspektivische Ansicht eines Teils einer Unterputz-Steckverbinderdose mit teilweise vormontierten Schaltartelementen und Leitungsabschnitt-Steckverbindern;
- Fig. 6: eine Prinzip-Darstellung einer Kontaktplatte mit einer Matrix aus Kontaktstellen in der in Fig. 5 dargestellten Steckverbinderdose;
- Fig. 7: eine perspektivische, auseinandergezogene Darstellung einer Steckverbinderdose mit Verschlußdeckel;
- Fig. 7a: einen Steckverbinderdosen-Deckel für eine Schalter-Steckverbinderdose;
- Fig. 8: eine schematische Skizze eines Behälters für einen kompletten Bausatz für eine Elektroinstallation in einem Gebäude;
- Fig.9: ein schematisch dargestelltes System zur Erstellung eines Ausführungsplans und einer Stückliste;
- Fig. 9a: eine Prinzip-Darstellung einer Kontaktplatte mit einer Matrix aus Kontaktstellen einer abgewandelten Ausführungsform einer Steckverbinderdose, die der in Fig. 5 dargestellten Steckverbinderdose im Prinzip ähnelt, jedoch für Bustechnik geeignet ist;
- Fig. 10: eine perspektivische Ansicht eines Teils einer erfindungsgemäßen Steckverbinderdose mit teilweise vormontierten aktiven und passiven Schaltartelementen;
- Fig. 11: eine perspektivische Darstellung eines Rangierverteilers mit zwei Kontaktplatten, die über ein Doppel-Schaltartelement gekoppelt sind;
- Fig. 12: eine Seitenansicht der Verbindungsstelle zweier benachbarter Kontaktplatten; und
- Fig. 13: eine perspektivische Ansicht eines noch nicht zusammengeschnappten Gehäuses für den Rangierverteiler gemäß Fig. 11.
- Fig. 14: einen schematischen Grundriß einer Abzweigdose, ähnlich Fig. 6;
- Fig. 15: eine Draufsicht auf einen Doseneinsatz für eine Schalterdose;
- Fig. 16: eine Schnittansicht entsprechend der Linie 3-3 in Fig. 15;
- Fig. 17: eine perspektivische Ansicht eines einstückigen Stanzteils mit zwei Leitungsanschlußelementen und einem Kontaktelement;
- Fig. 18: eine teilweise geschnittene Seitenansicht eines Doseneinsatzes, in den ein vorkonfektionierter Schalter eingesteckt wird;
- Fig. 19: eine schematische perspektivische Darstellung eines Kontaktstücks, welches in einen Doseneinsatz eingesetzt ist,
- Fig. 20: eine perspektivische Ansicht eines teilweise an ein Kabelende angeschlossenen Steckverbinders;
- Fig. 21: eine teilweise geschnittene perspektivische Ansicht des Steckverbinders nach Fig. 20;
- Fig. 22: eine Querschnittansicht durch den Steckverbinder nach Fig. 20 und 21 in vergrößerter Darstellung;
- Fig. 23: eine teilweise geschnittene perspektivische Ansicht einer Federstahl-Verriegelungsscheibe für den Steckverbinder nach Fig. 20 bis 22,
- Fig. 24: einen schematischen Grundriß einer Steckverbinderanordnung mit Kontaktplatte für eine Abzweigdose, ähnlich wie Fig. 9;
- Fig. 25: eine schematisierte Teil-Darstellung einer Kontaktplatte mit in Reihenrichtung verlaufenden Kontaktmessern und in Spaltenrichtung verlaufenden Steckplätzen;
- Fig. 26: eine Seitenansicht der in Fig. 25 im Grundriß dargestellten Kontaktplatte;
- Fig. 27: eine schematische, elektrische Schaltungsskizze einer Steckverbinderanordnung gemäß der Erfindung;
- Fig. 28: eine Teil-Seitenansicht einer mit zwei Bauteilen bestückten Kontaktplatte;
- Fig. 29: eine perspektivische Ansicht eines in die Kontaktplatte eingebetteten Lichtleiters; und
- Fig. 30: eine Ansicht eines Lichtleiterendes, das gegenüber der Oberseite der Grundplatte versetzt ist.

Wie eingangs bereits erwähnt, soll hier zur Beschreibung der Erfindung als Ausführungsbeispiel die Elektroinstallation in einem Zimmer einer Wohnung in einem mehrgeschossigen Wohnhaus beschrieben werden. Die hierfür spezielle Schalter-Steckdosen etc. beschriebenen Merkmale gelten sinngemäß auch für andere Installationseinheiten, beispielsweise Wechselschalter, Antennenstecker, Telefonanschlüsse, etc.

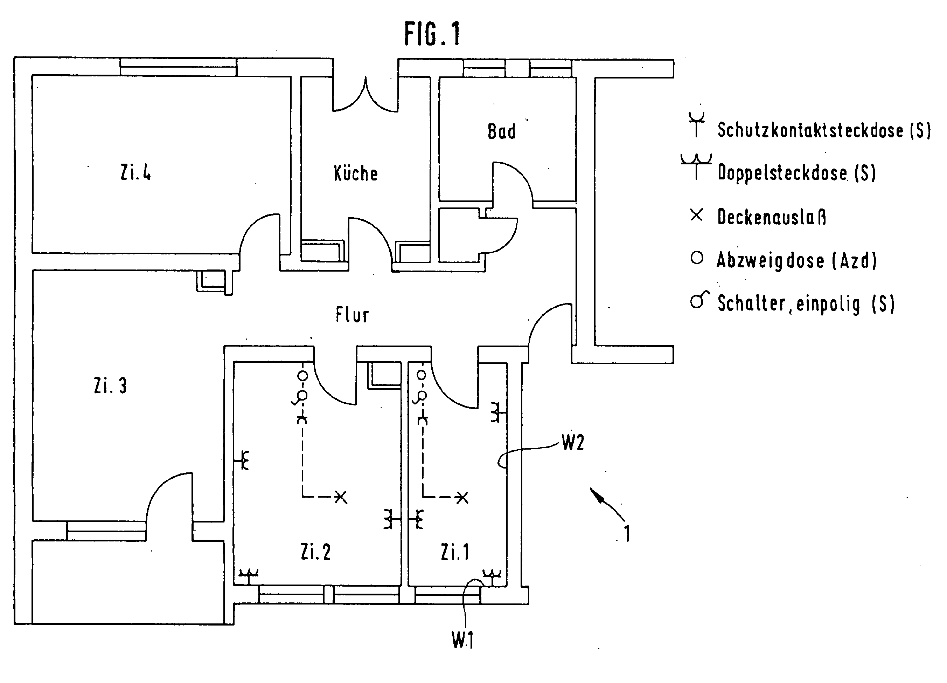

In Fig. 1 ist der Grundriß einer 4 Zimmer, Flur, Küche und Bad enthaltenden Geschoßwohnung dargestellt. Die einzelnen Zimmer sind mit Zi.1, Zi2, ... bezeichnet. Dieser Grundriß entspricht im wesentlichen einem Teil des Bauplans eines Gebäudes.

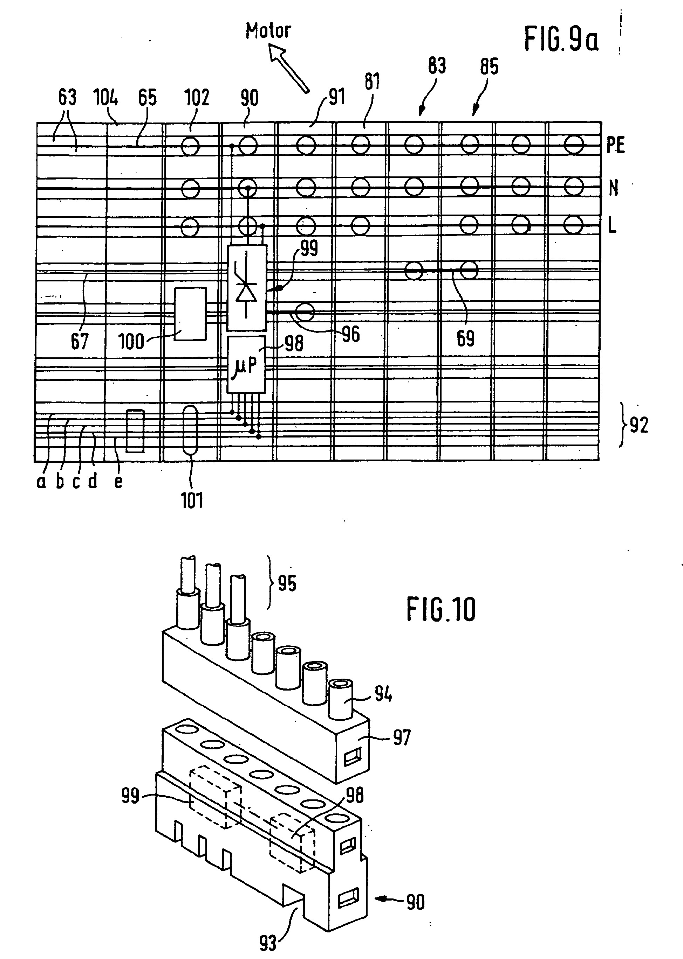

Der "Bauherr", der die Elektroinstallation in diesem Gebäude ausführen möchte, geht mit dem Bauplan des Architekten zu einem Planungsbüro für die Elektroinstallation. Mit Hilfe des schematisch in Fig. 9 dargestellten Systems wird der Bauplan, z. B. auch der in Fig. 1 gezeigte Geschoß-Bauplan 1 mit Hilfe eines Scanners 3 in den Speicher eines Rechners (PC) 5 eingelesen und auf den Bildschirm eines Monitors 9 dargestellt. Mit Hilfe des Monitors 9 und des Bauplans werden dann gemäß den Wünschen des Bauherrns (des Kundens) die einzelnen Merkmale der Elektroinstallation besprochen und festgelegt. Wie in Fig. 1 gezeigt ist, befinden sich in dem ersten und dem zweiten Zimmer (Zi.1, Zi.2) jeweils ein Deckenauslaß, eine Schutzkontaktsteckdose, mehrere Doppelsteckdosen, eine Abzweigdose und ein Schalter. Die Symbole für die einzelnen Elemente sind rechts in Fig. 1 angegeben und finden sich im Zimmer 1 und im Zimmer 2 wieder. In Fig. 1 nicht dargestellt sind die in der Praxis aber stets vorhandenen Bemaßungen, die den Abstand der Steckdosen, Schalter, ... von den einzelnen Ecken des Zimmers bzw. den benachbarten Wänden angeben.

Mit Hilfe eines entsprechenden Programms, welches in dem Rechner 5 gespeichert ist, und mit Hilfe der Tastatur 11 sowie der Maus 13 wird unter Beobachtung des auf dem Monitor 9 erscheinenden Bildes dann Zimmer für Zimmer die Gesamtheit der Elektroinstallation festgelegt. Mit Hilfe der Information aus dem über den Scanner 3 eingegebenen Bauplans und der im Zuge der Planung eingegebenen Stellen für die gewünschten Geräte (Schalter, Steckdosen etc.) wird dann ein Grundriß sowie eine Wandabwicklung von dem Programm erarbeitet und über einen Drucker 7 ausgedruckt.

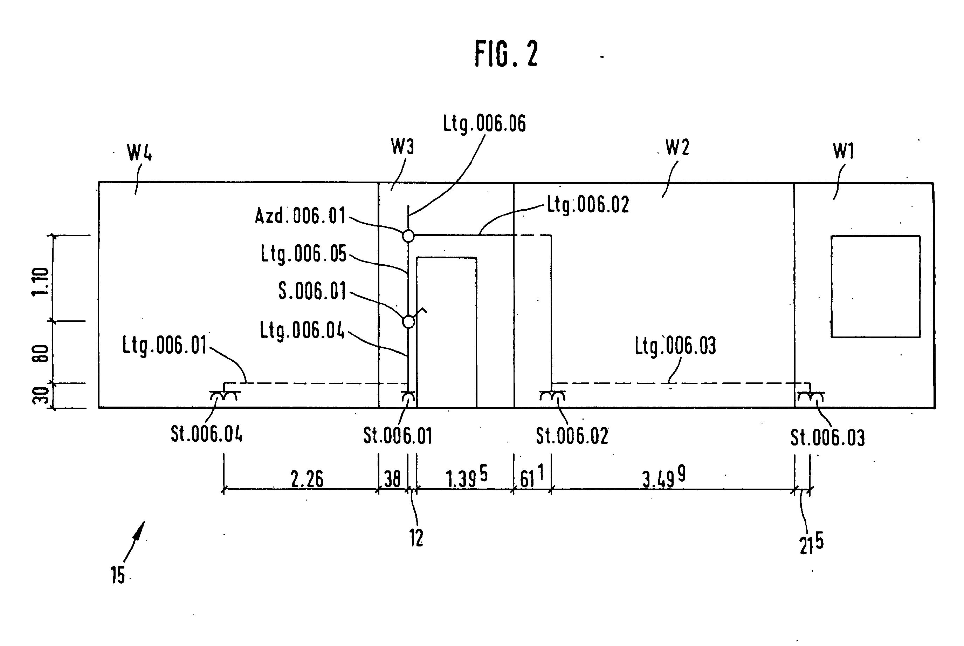

Der fertige Grundriß ist in Verbindung mit der Wandabwicklung für jedes Zimmer ein Teil des gesamten Ausführungsplans. Der Grundriß enthält sämtliche Symbole für die Geräte (Schalter, Steckdosen etc.), den Leitungsverlauf in den Zimmerdecken und die entsprechenden Bemaßungen. Um die Zeichnung in Fig. 1 nicht zu überlasten, sind rechts unten in Fig. 1 lediglich die Symbole für die Geräte in den Zimmern 1 und 2 dargestellt. Dementsprechend befinden sich auch im Flur, in der Küche, im Bad und in Zimmer Zi.3 und Zi.4 entsprechende Angaben, der in Verbindung mit den einzelnen Wandabwicklungen der in Fig. 2 dargestellten Art einen vollständigen Ausführungsplan ergibt.

Als nächstes sei auf Fig. 2 Bezug genommen, in der eine Wandabwicklung 15 dargestellt ist, welche die einzelnen Wände W1, W2, W3 und W4 des Zimmers Zi.1 aus Fig. 1 in Aussicht zeigt. Außerdem dargestellt sind sämtliche Installationspunkte mit Angaben über die Geräteart, und sämtliche Leitungsabschnitte. Ferner sind die Höhenangaben für die Installationspunkte auf der linken Seite in Fig. 2 dargestellt. An jedem Installationspunkt und an jedem Leitungsabschnitt findet sich eine eindeutige Bezeichnung (Positionsnummer), wobei das Kürzel St für eine Steckdose, das Kürzel Ltg für einen Leitungsabschnitt, das Kürzel S. für einen Schalter und das Kürzel Azd für eine Abzweigdose steht.

Unten in Fig. 2 sind Bemaßungen angegeben, die maßgeblich sind für die Länge der einzelnen Leitungsabschnitte. Die Leitungsabschnitte werden berechnet aus den Summen der Leitungsverläufe in den jeweiligen Wänden W1, W2, ..., wo hinzu jeweils ein gewisses Übermaß kommt, welches einen Ausgleich für nicht korrekt gesetzte Wände ermöglicht. Mit dieser aus Fig. 1 und Fig. 2 ersichtlichen Information und weiteren, besonderen Angaben des Kunden wird eine Stückliste für sämtliche bei der Elektroinstallation zu verwendenden Teile erstellt.

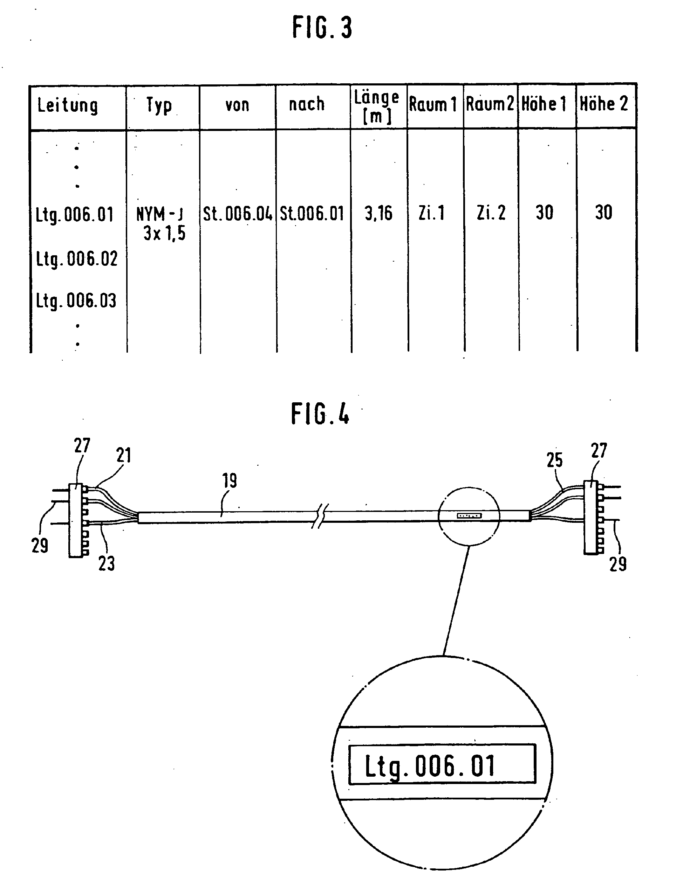

Fig. 3 zeigt einen Auszug aus einer solchen Stückliste. In der linken Spalte dieser Stückliste erkennt man die links in Fig. 2 eingezeichnete Leitung "Ltg. 006.001 ". Rechts davon ist unter der Spalte "Typ" der Kabeltyp angegeben, im vorliegenden Fall also ein dreiadriges Kabel mit einem Aderquerschnitt von 1,5 mm². In den beiden nächsten Spalten in Fig. 3 finden sich die zwei Installationspunkte, zwischen denen der Leitungsabschnitt "Ltg. 006.001" verläuft. In dem in Fig. 3 gezeigten Beispiel verläuft der Leitungsabschnitt von dem für eine Steckdose vorgesehenen Installationspunkt St. 006.04 zu dem ebenfalls für eine Steckdose vorgesehenen Installationspunkt St. 006.01. Wie ein Blick auf Fig. 2 zeigt, verläuft der Leitungsabschnitt von der Doppelsteckdose in der Wand W4 zu der Einfachsteckdose links unten neben der Tür in der Wand W3. Aus den Längenangaben gemäß Fig. 2 ermittelt der Rechner die benötigte Länge des Leitungsabschnitts unter Berücksichtigung der an den Enden des Leitungsabschnitts anzubringenden Steckverbinder. Die Länge ist ebenfalls in Fig. 3 angegeben.

In zwei weiteren Spalten in Fig. 3 finden sich Angaben über den Raum, von dem der Leitungsabschnitt ausgeht, und den Raum, zu dem der Leitungsabschnitt führt. Außerdem sind noch Angaben über die Höhe der beiden Leitungsabschnitt-Enden vorhanden.

Zur Vereinfachung der Installation sind drei unterschiedliche Höhen für die Installationspunkte möglich, nämlich 30 cm über dem Boden für das unterste Niveau, 1,10 m über dem Boden, insbesondere für Schalter, und 2,20 m über dem Boden für insbesondere Abzweigdosen.

Die über den Drucker 7 gemäß Fig. 9 ausgegebenen Pläne (Ausführungsplan umfassend die Abwicklung gemäß Fig. 2 und die Grundrisse gemäß Fig. 1; und die Stückliste gemäß Fig. 3) werden dann zunächst von einem Fachbetrieb dazu benutzt, einen Bausatz von vorkonfektionierten Teilen zusammenzustellen.

Anhand der Stückliste werden entsprechende Längen von Leitungskabeln zugeschnitten, endseitig abisoliert und mit passenden Steckverbindern ausgestattet. Fig. 4 zeigt, einen Leitungsabschnitt 19 aus einem dreiadrigen Kabel. An jedem Ende des Leitungsabschnitts sind einige Adern 21, 23 und 25 dargestellt, die in identisch ausgebildete Steckverbinder 27 eingeführt sind. In den Steckverbindern stehen entsprechend den eingeführten Adern die Aderenden 29 ab und sind mit einem Verriegelungsmechanismus im Steckverbinder zugentlastet montiert. Insgesamt besitzt jeder Steckverbinder beim vorliegenden Ausführungsbeispiel sieben Kontakte.

Zu dem Vorkonfektionieren der Leitungsabschnitte mit den Steckverbindern gehört auch das Markieren des Leitungsabschnitts, wie dies rechts unten in Fig. 4 dargestellt ist. Mit einem Aufkleber wird auf der Außenisolierung des Kabels ein Schild mit der entsprechenden Bezeichnung gemäß Stückliste (Fig. 3) und Ausführungsplan (Figuren 1 und 2) angebracht. Im vorliegenden Fall handelt es sich um einen Leitungsabschnitt mit der Positionsnummer Ltg.006.01.

Es ist ersichtlich, daß jeder Steckverbinder gemäß Fig. 4 eine Mindestanzahl von Kontakten aufweisen muß, für Anlagen ohne Drehstromleitungen reicht üblicherweise eine Kontaktzahl von 5 oder 6 aus.

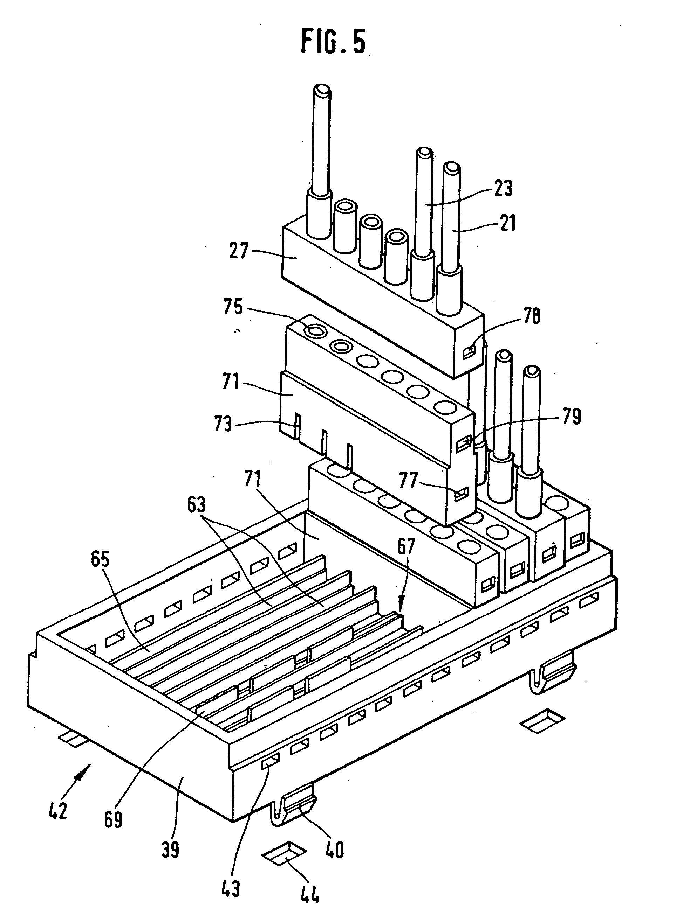

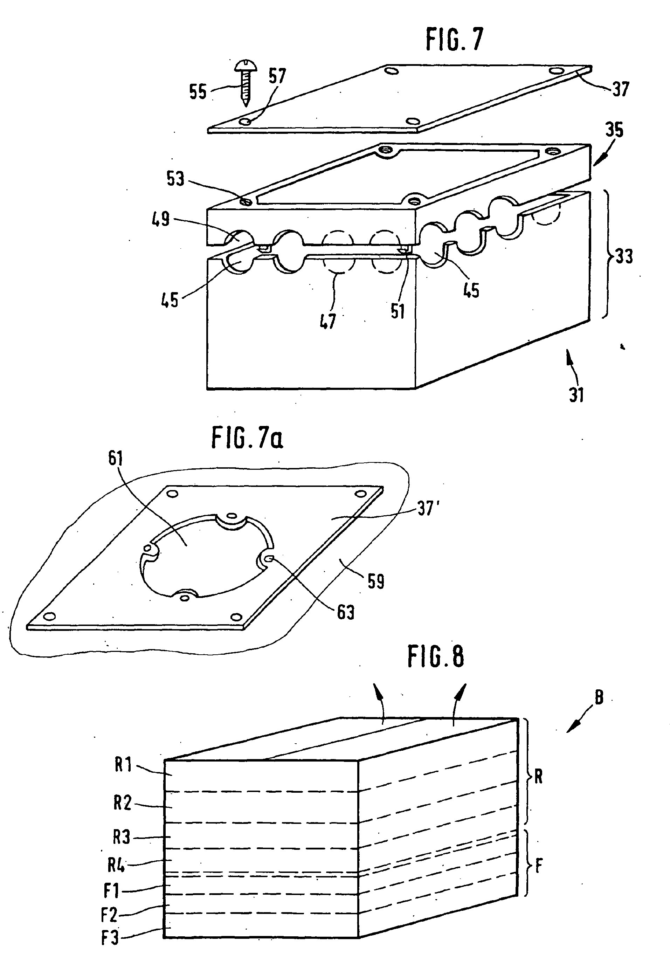

An den einzelnen Installationspunkten St 006.04; St 006.01; S. 006.01; Azd 006.1 etc. (Fig. 2) befindet sich jeweils ein einziger Typ von Steckverbinderdosen, die in die betreffende Wand eingelassen wird. Ein Teil einer solchen Steckverbinderdose ist in Fig. 5 dargestellt. Bevor aus den internen Aufbau der Steckverbinderdose eingegangen wird, sollen das Gehäuse und dessen Einzelheiten anhand der Fig. 7 näher erläutert werden.

Wie in Fig. 7 dargestellt ist, enthält eine Steckverbinderdose 31 ein Bodenteil 33, ein Oberteil 35 und einen Deckel 37.

Das Bodenteil 33 ist ein kastenförmiges Bauteil und nimmt einen Verbindungsblock 42 auf, der weiter unten in Verbindung mit Fig. 5 noch erläutert wird. Im Boden des Bodenteils 33 sind Rastausnehmungen (44 in Fig. 5) enthalten, die zur Aufnahme des Verbindungsblocks 42 dienen.

In dem oberen Rand des Bodenteils 33 sind mehrere halbkreisförmige Ausnehmungen 45 ausgebildet, hergestellt durch Ausbrechen von Teilen der betreffenden Seitenwand des Bodenteils 33, wobei der ausgebrochene Bereich festgelegt wird durch Sollbruchstellen 47, wie dies bei Installationsdosen im Prinzip bekannt ist.

Das Oberteil 35 enthält ebenfalls halbkreisförmige Ausnehmungen 49, wobei sich die Ausnehmungen 45 und die Ausnehmungen 49 paarweise zu kreisrunden Durchgangsöffnungen für Leitungskabel ergänzen. Das Oberteil 35 wird mit Hilfe von Rastzungen 51 auf das Bodenteil 33 aufgeschnappt. In den Ecken der Wände des Oberteils 35 befinden sich Verdickungen mit darin ausgesparten Aufnahmelöchern. Sämtliche Teile der in Fig. 7 dargestellten Steckverbinderdose 31 sind aus üblichem Isolierstoff hergestellt. Die Bohrungen 53 dienen zur Aufnahme von selbstschneidenden Schrauben 55, mit deren Hilfe der Deckel 37 auf das Oberteil 35 aufgeschraubt wird, wozu sich fluchtend mit den Bohrungen 53 in den Ecken des Deckels 37 Durchgangsbohrungen 57 befinden.

Fig. 7 zeigt eine als Abzweigdose dienende Steckverbinderdose 31 mit einem geschlossenen Deckel 37. Wird die in Fig. 7 schematisch dargestellte Steckverbinderdose für die Montage eines Schalters oder einer Steckdose verwendet, so besitzt der Deckel 37 eine Öffnung, in der Schalter bzw. die Steckdose eingebaut wird.

Fig. 7a zeigt eine Ausführungsform eines Deckels 37' mit einer Aussparung 61 mit in deren Umfang vorhandenen Vorsprüngen mit Durchgangsbohrungen 63 zur Anbringung eines Schalters oder einer Steckdose.

Bei in die Wand eingelassener Steckverbinderdose 31 gemäß Fig. 7 schließt die Oberseite des Deckels 37 bündig mit der Außenfläche der Wand, d. h. der Oberfläche des Putzes ab.

Fig. 5 zeigt in perspektivischer Darstellung den Verbindungsblock 42. Eine Kontaktplatte 39 ist mittels Rastzungen 40 in die Rastausnehmungen 44 des Bodenteils 33 eingeschnappt. Links in Fig. 5 ist der flache Boden der Steckverbinderdose 31 angedeutet. Der Boden enthält eine Reihe von Rastausnehmungen 44 für die Rastvorsprünge 40.

Die in Fig. 5 dargestellte Ausführungsform des Verbindungsblocks 42 der Steckverbinderdose enthält eine von vier Seitenwänden umgebene Kontaktplatte, von der insgesamt sechs Paare von Stegen 63 nach oben ragen, die zwischen sich eine Aufnahmenut zur Aufnahme eines Kontaktmessers 65 bilden.

Aus Fig. 5 ist ersichtlich, daß es drei benachbarte, im wesentlichen durchgehende Messerkontakte 65 gibt, denen die drei Adern von dreiadrigen Leitungskabeln zugeordnet werden, wie weiter unten noch ausgeführt wird. Außerdem gibt es drei weitere Paare von Stegen 63, die zwischen sich jeweils eine Nut 67 bilden. An ausgewählten Stellen der Nuten befinden sich kleine Messerkontakte 69, welche eine Überbrückung zwischen jeweils zwei benachbarten Kontakten benachbarter Schaltartelemente 71 bilden.

Die Schaltartelemente 71 sind im wesentlichen prismatisch geformte Isolierstoffblöcke mit von oben in Fig. 5 nach unten verlaufenden Durchgangsöffnungen (sechs Durchgangsöffnungen pro Schaltartelement 71 in Fig. 5), wobei auf der Unterseite selektiv Aufnahmeschlitze 73 ausgebildet sind, in denen Abschnitte von Kontaktmessern 65 oder 69 aufgenommen werden. Innerhalb der Schaltartelemente 71 verlaufen elektrisch leitende Verbindungen zu Aufnahmeöffnungen 75 auf der Oberseite der Schaltartelemente. An den Seitenwänden der Schaltartelemente befinden sich Rastvorsprünge 77, die in die Rastausnehmungen 43 in den Seitenwänden des Bodenunterteils 39 eingreifen.

Die Vorkonfektionierung des Verbindungsblocks 42 gemäß Fig. 5 erfolgt in der Weise, daß je nach gewünschter Art der Dose durchgehende und abschnittsweise Kontaktmesser 65 und 69 in entsprechende Stellen der Nuten 67 eingesetzt werden, und daß dann entsprechend mit Schlitzen 73 ausgestattete Schaltartelemente 71 in das Gehäuse eingeschnappt werden, so daß die Rastvorsprünge 77 in die Rastausnehmungen 43 eingreifen. Wie man sieht, wird durch diese Anordnung im Prinzip eine Kontaktstellen-Matrix geschaffen, durch die selektive Verbindungen hergestellt werden können. Die Öffnungen 75 in der Oberseite der Schaltartelemente 71 dienen zur Aufnahme von in Fig. 5 nicht zu sehenden Aderenden 21 der Leitungsabschnitte 23 auf der Innenseite der Steckverbinder 27.

Beim dargestellten Ausführungsbeispiel sind die Flachseiten der Schaltartelemente 71 im oberen Bereich nach innen zurückgesetzt, ihr Querschnitt entspricht dem lichten Innenquerschnitt der Steckverbinder 27, die nach Aufsetzen oben auf die Schaltartelemente 71 mit diesen verrastet werden, wozu an den Schaltartelementen 71 Rastvorsprünge 79 und in den Seitenwänden der Steckverbinder 27 Rastausnehmungen 78 ausgebildet sind.

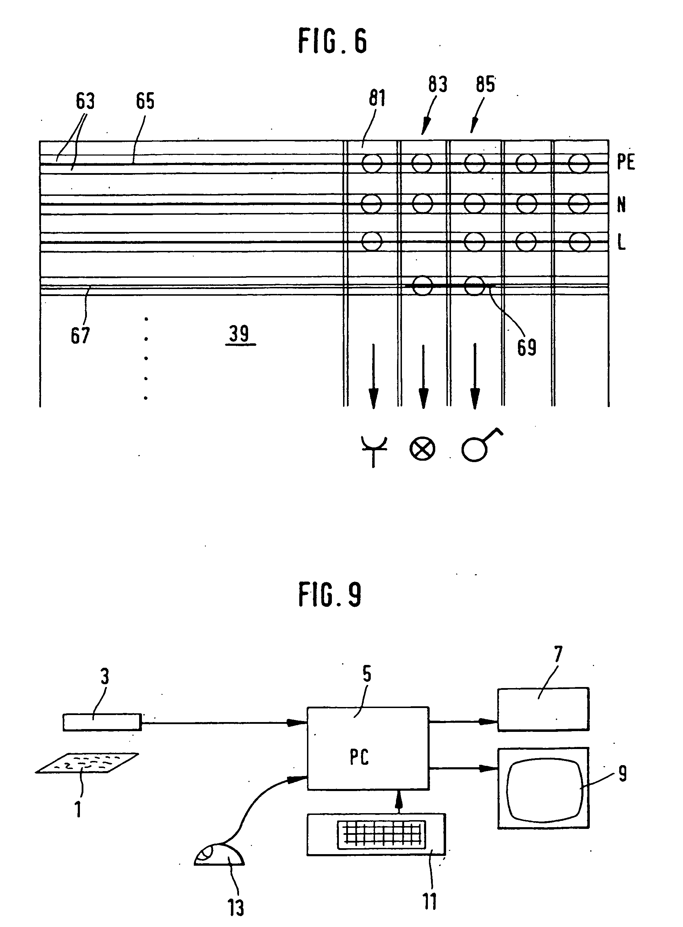

Fig. 6 zeigt eine schematische Darstellung des Verbindungsblocks 42 mit deren am Boden befindlichen Kontaktplatte 39, den sich horizontal in Fig. 6 erstreckenden paarweisen Stegen 63, zwischen denen jeweils eine Längsnut 67 gebildet wird, und den Kontaktmessern 65 bzw. 69, von denen die Kontaktmesser 65 sich durchgehend über die gesamte in Fig. 6 horizontal verlaufende Länge in drei benachbarten Nuten 67 erstrecken, während sich die kurzen Kontaktmesser 69 nur in ausgewählten Längenabschnitten der Nuten 67 erstrecken.

Wie aus Fig. 6 ersichtlich ist, bilden die Kontaktmesser 65 durchgehende Reihen von Kontaktstellen in den drei benachbarten oberen Nuten, wobei diese drei durchgehenden Reihen von Kontaktstellen für den Phasenleiter, den Nulleiter und den Schutzleiter vorgesehen sind. Eine einfache Steckdose würde in der Weise angeschlossen werden, daß das in Fig. 5 näher dargestellte Schaltartelement 71 die drei in benachbarten Reihen nebeneinanderliegenden Kontaktmesser 65 kontaktiert und auch der dazugehörige Steckverbinder 27 mit entsprechenden Leitungsadern der Steckdose verbunden wären.

In den Positionen 83 und 85 sind zwei Steckplätze der Schaltart "Lampenleitung" (bei 83) und der Schaltart "Schalterleitung" (bei 85) dargestellt. Wie man sieht, sind die beiden Steckverbinder an der Lampenleitung und der Schalterleitung beide mit dem Nulleiter und dem Schutzleiter verbunden, der Steckverbinder ist über das Schaltartelement mit der Phasenleitung L verbunden, und über das Kontaktmesser 69 sind zwei Adern jeweils der Lampenleitung und der Schalterleitung verbunden.

Die Verbindung zwischen dem Verbraucher (Lampen) und dem Phasenleiter erfolgt über den Schalter.

Dem Fachmann ist ersichtlich, daß dieses Prinzip der Konfektionierung für die verschiedenen in Frage kommenden Schaltarten entsprechend ausgeführt werden kann. Die Kontaktplatte 39 mit den in horizontaler Reihenrichtung verlaufenden Kontaktmessern und den in vertikaler Spaltenrichtung verlaufenden Steckplätzen (entsprechend den Positionen der Schaltartelemente 71 in Fig. 5) bildet eine Matrix von Kontaktstellen, wobei die "Belegung" der Matrix mit Hilfe der Kontaktmesser 65 und 69 in einfacher und rascher Weise erfolgen kann.

In Fig. 5 sind in der Kontaktplatte 39 bereits vier Schaltartelemente 71 eingesetzt. Nach dem Einsetzen der Schaltartelemente 71 in die Kontaktplatte 39 wird dann diese Einheit in das Bodenteil 33 der Steckverbinderdose 31 eingesetzt. Das Bodenteil wird mit einer Bezeichnung (Positionsnummer) ausgestattet, ähnlich, wie dies in Fig. 4 für einen Leitungsabschnitt dargestellt ist, und die so vorkonfektionierte Steckverbinderdose wird einem Bausatz beigefügt, der außer den vorkonfektionierten Leitungsabschnitten und den vorkonfektionierten Steckverbinderdosen auch noch die für den Verbraucher schließlich sichtbaren "Geräte" enthält, also Steckdosen, Wippenschalter etc. Die in Fig. 5 dargestellte Anordnung ist noch mit einer farblichen Codierung ausgestattet, die gleiche Schaltartelemente 71 und Steckverbinder 27 in gleicher Art aufweisen. Durch die mechanische, elektrische oder farbige Codierung wird erreicht, daß ein ganz bestimmter Steckverbinder 27 einem ganz bestimmten Schaltartelement 71 zugeordnet ist, so daß Verwechslungen bei der Montage ausgeschlossen sind.

Die oben erläuterten vorkonfektionierten Teile werden zu einem Bausatz zusammengestellt. Fig. 8 zeigt einen Behälter B, der einen solchen vollständigen Bausatz beinhaltet. In dem Behälter B sind mehrere "Schichten" vorgesehen, die eine solche Reihenfolge aufweisen, so daß der Monteur - bei sinnvoller Verwendung - jeweils nur Zugang zu den Teilen hat, die als nächstes bei der Elektroinstallation Verwendung finden.

Gemäß Fig. 8 befinden sich in einer oberen Schicht R die Teile für die Rohinstallation, in einer unteren Schicht F befinden sich die Teile für die Feininstallation. In der obersten Schicht R1 befindet sich z. B. eine auf Videoband aufgezeichnete Anleitung für den Monteur, ferner finden sich dort die Pläne gemäß den Figuren 1 bis 3, die dem Behälter B für den Bausatz als erstes entnommen werden. Mit Hilfe dieser Unterlagen informiert sich der Benutzer zunächst einmal über das System. Mit Hilfe des Ausführungsplans (Figuren 1 und 2) kann er dann die Lage der Installationspunkte anzeichnen, ebenso den Verlauf der einzelnen Leitungsabschnitte.

In der nächsten Schicht R2 befinden sich die vorkonfektionierten Bodenteile der Steckverbinderdosen mit den Kontaktplatten und den Schaltartelementen. Nach dem Ausstemmen der Aufnahmeöffnungen in den Wänden werden die Steckverbinderdosen montiert. Der Schicht R3 des Behälters B in Fig. 8 werden dann die vorkonfektionierten Leitungsabschnitte wie Zubehörteile entnommen, anschließend werden die Leitungen verlegt. Die Enden der Leitungsabschnitte werden in die halbkreisförmigen Aufnahmeöffnungen 45 in Fig. 7 eingelegt. Dann erfolgt die Verbindung zwischen den an den Enden der Leitungsabschnitte befindlichen Steckverbindern 27 mit den Schaltartelementen in den montierten Steckverbinderdosen. Anschließend werden die Oberteile auf die Bodenteile aufgeschnappt. Die offenen Seiten werden verschlossen, anschließend erfolgt das Verputzen der Wände.

Anschließend beginnt die Feininstallation. In der Schicht F1 in Fig. 8 befindet sich wiederum Anweisungsmaterial, um den Benutzer über das richtige Vorgehen zu informieren. In der Schicht F2 befinden sich die Deckel 37 bzw. 37' aus Fig. 7, 7a. Diese Deckel werden auf die entsprechenden Oberteile 35 der Steckverbinderdosen aufgeschraubt.

In der unteren Schicht F3 befinden sich dann die "Endgeräte", also die mit vorkonfektionierten Steckverbindern ausgestatteten Schalter, Steckdosen, etc. An den betreffenden Installationspunkten wird dann die Steckverbindung zwischen den Steckverbindern und den Schaltern, Steckdosen etc. mit den entsprechenden Schaltartelementen in den Steckverbinderdosen hergestellt. Anschließend erfolgt das Anschrauben der Schalter, Steckdosen etc. an den Verschlußdeckeln.

Die oben am Beispiel eines Zimmers beschriebene Elektroinstallation wird für sämtliche Zimmer und Teile der Wohnung entsprechend ausgeführt. Natürlich erfolgt die Verbindung zwischen zwei durch einen Leitungsabschnitt verbundenen Installationspunkten nicht nur innerhalb eines Zimmers, sondern auch zwischen zwei verschiedenen Zimmern. Außerdem kann auch eine Verbindung zwischen zwei zu einer Wohneinheit gehörigen Geschossen in entsprechender Weise ausgeführt werden.

Den Abschluß der Installation bildet die Endabnahme durch den hierzu befugten Fachmann.

Die obige Beschreibung einer bevorzugten Ausführungsform der Erfindung betrifft die "konventionelle" Elektroinstallation. In letzter Zeit haben sich mehr und mehr sogenannte busgesteuerte Anlagen bewährt. Bei diesen Anlagen erfolgt die Informationsübertragung wie "Schliessen", "Öffnen" oder dergleichen nicht über separate Stromleitungen, sondern über einen einzigen Informationsübertragungsbus, der durch das Gebäude oder den Gebäudeteil geführt ist. Erfindungsgemäß kann zusammen mit oder auch separat von den Stromleitungen ein solcher InformationsübertragungsBus verlegt werden. In einer zu der oben beschriebenen Ausführungsform abgewandelten Ausführungsform, wie sie in den Fig. 9a und 10 dargestellt ist, sind zusätzlich zu den oben beschriebenen Stegen 63 und den darin enthaltenen Kontaktmessern 65, 69 ähnlich ausgebildete Stege mit darin durchgängig aufgenommenen Kontaktmessern a, b, c, d und e vorhanden. Hierdurch wird insgesamt ein Teil eines Busses 92 gebildet. Die dazugehörige Steckverbinderdose ist im Prinzip genauso ausgebildet, wie dies in Fig. 5 gezeigt ist. Das Verbinden der fünf Adern des Busses 92 verschiedener Steckverbinderdosen erfolgt über fünfadrige Busleitungen, die genauso verlegt werden können, wie es oben für die vorkonfektionierte Leitungsabschnitte 19 erläutert wurde. Es besteht aber auch die Möglichkeit, die Busverbindungen "konventionell" ohne Vorkonfektionierung herzustellen.

In Fig. 9a sind neben den passiven Schaltartelementen zwei aktive Schaltartelemente 90 und 102 gesteckt. Bei dem aktiven Schaltartelement 90 handelt es sich um ein busgesteuertes Aktorelement zum Steuern eines hier nicht dargestellten Motors, beispielsweise Antriebsmotors für eine elektrisch betätigbare Jalousie. Elektrisch angeschlossen ist das busgesteuerte Aktorelement 90 an den Phasenleiter, den Nulleiter und den Schutzleiter, außerdem noch an die fünf Kontaktmesser a, b, c, d und e des Busses 92. Die elektrischen Verbindungen sind in Fig. 9a schematisch durch Verbindungsstriche angedeutet. Die von dem Bus 92 kommende Information gelangt an eine Prozessorschaltung 98 (*µ*p = Mikro-Prozessor). Wenn z.B. bei dem Bus 92 an das Aktorelement 90 die Information gegeben wird, den Motor einzuschalten, stellt ein in dem Aktorelement 90 enthaltenes Relais oder ein Halbleiterbauelement (hier angedeutet durch ein Thyristor-Symbol) die elektrische Verbindung zwischen der Stromversorgung und dem Motor her. Dies geschieht mit Hilfe eines kurzen Kontaktmessers 96, ähnlich dem bereits erwähnten Kontaktmesser 69. Das Schaltartteil 91 mit den dazugehörigen Steckverbinder führt dann aus der Steckverbinderdose zu dem angesteuerten Motor.

Links neben dem busgesteuerten Aktorelement 90 ist ein busgesteuertes Sensorelement 102 dargestellt. Über die Anschlüsse am Steckverbinder empfängt das Sensorelement 102 z.B. Information von einem Helligkeitsfühler. Ein Verarbeitungs-Bauelement 90 setzt diese Information dann um in buskonforme Information, die über die Messerkontaktverbindungen (angedeutet durch ein Oval 101) auf den Bus gesendet wird.

Die Verbindung der Kontaktmesser in den verschiedenen Steckverbinderdosen einer Anlage erfolgt über fünfadrige Leitungen, an deren Enden jeweils ein Steckverbinder sitzt, der auf ein passives Schaltartelement der bei 104 dargestellten Art gesteckt wird.

Fig. 10 zeigt schematisch den äußeren Aufbau eines aktiven Schaltartelements. Rechts oben in Fig. 10 erkennt man einen Busleitungseingang 94. Der Microprozessor 98 und das Halbleiterbauelement 99 sind im Gehäuse des Aktorelements 90 untergebracht. Auf der Unterseite des Aktorelements 90 befinden sich drei Schlitze zur Aufnahme der Kontaktmesser für Nulleiter, Phasenleiter und Schutzleiter, rechts unten befindet sich ein Schlitz 93, der die Kontaktmesser a, b, c, d, e des Busses 92 übergreift, um eine elektrische Verbindung zwischen dem Microprozessor und dem Bus herzustellen. Ein nicht dargestellter weiterer Schlitz kann zur Aufnahme des kurzen Kontaktmessers 96 in Fig. 9 dienen. Anstelle eines separaten Schaltartelements für den Verbraucher, hier für den Motor, der mit dem Aktorelement 90 gekoppelt ist, kann auch ein direkter Anschluß zwischen dem Motor, dem in Fig. 10 gezeigten Steckverbinder 97 und dem Aktorelement 90 erfolgen. Der Busleitungseingang 94 kann zur Verbindung mit dem Bus dienen, so daß auf ein separates, links in Fig. 9 gezeigtes Schaltartelement 104 verzichtet werden kann.

Die oben erläuterte Kontaktplatte 39 läßt sich in einem sogenannten Rangierverteiler einsetzen. Rangierverteiler dienen in einer Elektroinstallation (insbesondere in großen Bürogebäuden und dergleichen) zum Verbinden umfangreicher Kabelmengen in bestimmter Art und Weise. Wenn z. B. die in abgehängten Decken verlegten Lampenleitungen mit Schalterleitungen und Zuleitungen zu bestimmten Schaltungen verbunden werden sollen, bieten Rangierverteiler den Vorteil, daß bei späteren Grundrißänderungen eine leichte Anpassung der Schaltung vorgenommen werden kann, ohne daß man neue Leitungen verlegen muß. Es müssen lediglich an dem Rangierverteiler einige Umklemmarbeiten vorgenommen werden.

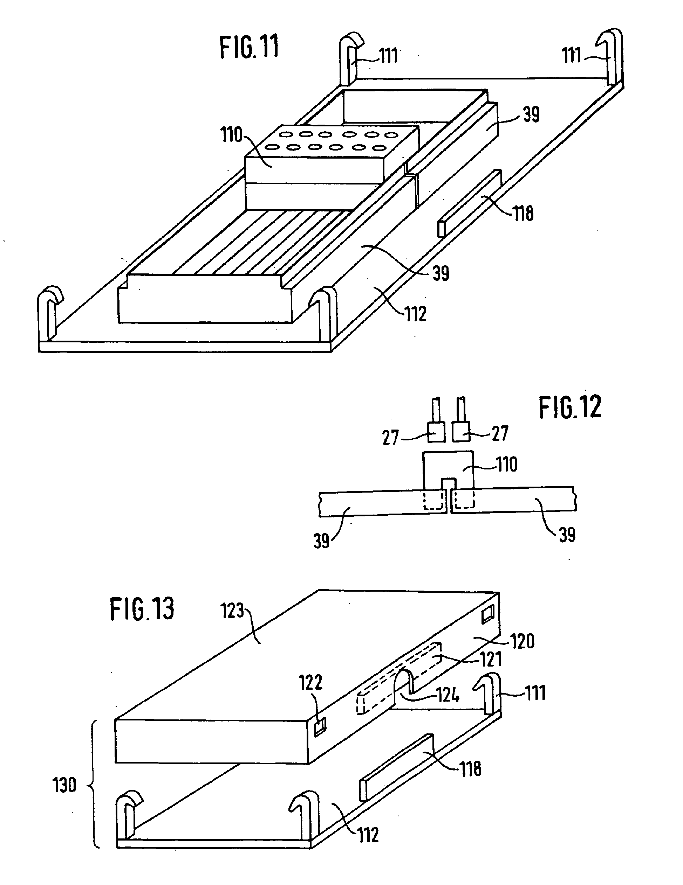

Wie in Fig. 11 gezeigt ist, sind auf einer Grundplatte 112 eines Rangierverteilergehäuses in Längsrichtung hintereinander zwei Kontaktplatten 39 der oben beschriebenen Art montiert. Zur mechanischen und elektrischen Kopplung der beiden Kontaktplatten 29 dient ein besonders ausgeführtes Doppel-Schaltartelement 110, bei dem es sich entweder um ein aktives oder ein passives Schaltartelement der oben beschriebenen Art handeln kann. Auch Mischformen sind möglich. Durch Verwendung dieses Doppel-Schaltartelements geht kein Steckplatz auf der einen oder der anderen der beiden Kontaktplatten 39 verloren. Oben in das Doppel-Schaltartelement 110 werden zwei Steckerteile 27 eingesteckt, wie dies schematisch in Fig. 12 angedeutet ist. Zur Vereinfachung der Darstellung sind keine weiteren Schaltartelemente dargestellt, die aber natürlich in der gleichen Weise vorhanden sind, wie dies in beispielsweise Fig. 5 dargestellt ist.

Die Grundplatte 112 des Verteilergehäuses trägt an den vier Ecken jeweils einen Rasthaken 111, mit deren Hilfe die Grundplatte 112 mit dem Deckelteil 123 des in Fig. 13 auseinandergenommen dargestellten Verteilergehäuses 130 verrastet wird. Hierzu sind in den Seitenwänden des Deckelteils 123 Rastausnehmungen 122 vorgesehen.

Die Steckerteile 27 werden im Inneren des Verteilergehäuses 30 auf die zugehörigen Schaltartelemente bzw. das Doppel-Schaltartelement 110 gesteckt. Die Leitungen verlaufen dabei durch eine in einer LängsSeitenwand des Deckelteils 123 ausgebildeten U-förmigen Öffnung 124. Auf der Innenseite dieser Längswand befindet sich eine Gummi- oder Kunststoff-Dichtleiste 121, deren unterer Rand bei zusammengeschnapptem Verteilergehäuse 130 auf dem oberen Rand einer elastischen Dichtungsleiste 118 aufsitzt, die am Rand der Grundplatte 113 festgeklebt ist. Das durch die Öffnung 124 hindurchgeführte Kabel wird an den beiden Dichtungsleisten 118, 121 dicht umschlossen.

Das Doppel-Schaltartelement 110 hat die Aufgabe, die drei durchgehenden Leiter PE (65), N (63) und L (63) der beiden Kontaktplatten 39 elektrische miteinander zu verbinden. Das Doppel-Schaltartelement hat im übrigen die gleichen Funktionen wie die oben erläuterten Schaltartelemente 71 bzw. 90.

Nach dem Bestücken der Kontaktplatten 39 gemäß Fig. 11 mit Hilfe von Steckerteilen 27 und dem Doppel-Schaltartelement 110 sowie ggf. weiterer Schaltartelemente und Steckerteile werden die durch die Öffnung 124 durchgeführten Kabel mit üblichen Mitteln fixiert, bevor das Deckelteil 123 aufgeschnappt wird. Außer der in Fig. 13 dargestellten einen Öffnung 124 können noch weitere Öffnungen vorhanden sein, die durch Herausbrechen an vorgeformten Sollbruchstellen geschaffen werden können.

Es können unterschiedlich große Verteilergehäuse 130 bereitgestellt werden, die zur Aufnahme von drei, vier oder noch mehr Kontaktplatten ausgebildet sind. Die Dichtleisten 118, 121 können sich auch über die gesamte Länge des Verteilergehäuses 130 erstrecken, so daß sie ggf. weitere Öffnungen wie die Öffnung 124 überdecken.

Der oben beschriebene Rangierverteiler kommt vornehmlich in Industrie-, Büro- und Verwaltungsbauten zum Einsatz, wie auch das oben beschriebene Installationsverfahren nicht auf Wohngebäude beschränkt ist, sondern praktisch bei jedem Bauvorhaben genutzt werden kann.

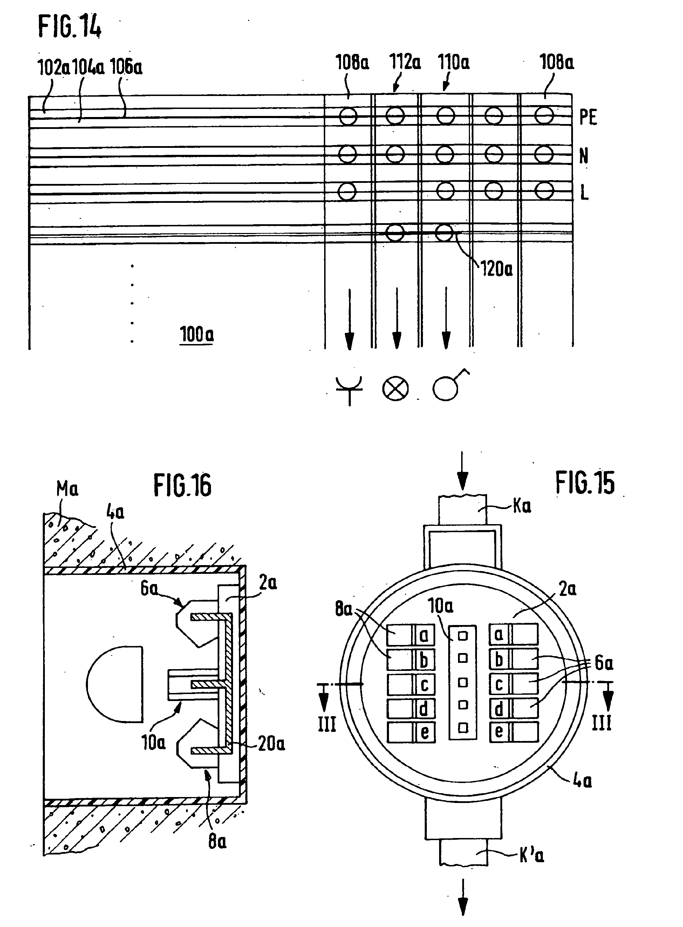

Im folgenden sollen anhand der Figuren 14 bis 19 Ausführungsbeispiele eines Doseneinsatzes in Verbindung mit einer Gebäude-Elektroinstallation beschrieben werden, obschon sich versteht, daß der Doseneinsatz nicht auf einen solchen speziellen Anwendungsfall beschränkt ist.

Der Doseneinsatz eignet sich auch und besonders gut für das Gebäude-Elektroinstallationssystem vorgeschlagen, bei dem praktisch sämtliche Bestandteile der Elektroinstallation vom Fachbetrieb vorbereitet und vorkonfektioniert werden, damit sie vom Nicht-Fachmann zur Ausführung der Installation verwendet werden können.

Fig. 14 zeigt schematisch den Grundriß einer Abzweigdose einer Elektroinstallation. Die Abzweigdose enthält ein Isolierstoffgehäuse mit einer in Fig. 14 teilweise dargestellten Grundplatte 100a, auf der sich von links nach rechts durchgehend Leisten 102a und 104a mit einem gewissen Zwischenabstand erstrecken, um zwischen- sich jeweils ein Kontaktmesser 106a aufzunehmen. Es sind mehrere durchgehende Kontaktmesser 106a vorgesehen, jeweils einer für Schutzleiter, Nulleiter und Phasenleiter (PE, N, L). Auf die Leisten und die Kontaktmesser sind Steckverbinder 108a aufgesteckt, die an den mit einem Kreis bezeichneten Stellen elektrischen Kontakt mit den betreffenden Kontaktmessern 106a macht. An den Steckverbindern gehen Leitungen zu beispielsweise einem Deckenauslaß (Steckverbinder 112a) oder zu einem Schalter (Steckverbinder 110a). Die entsprechenden Symbole für diese Steckverbinder 112a und 110a sind unten in Fig. 14 dargestellt. Die beiden benachbart angeordneten Steckverbinder enthalten ein kurzes Kontaktmesser 120a. Die von den beiden Steckverbindern 110a und 120a abgehenden Leitungen führen zu einem Schalter bzw. zu einem Deckenauslaß für eine Lampe. Wird der Schaltkontakt in dem Schalter geschlossen so fließt elektrischer Strom von dem Schalter über das kurze Kontaktmesser 120a zu dem Verbraucher (Lampe).

Die Verbindung zwischen der in Fig. 14 schematisch dargestellten Abzweigdose einerseits und zu dem Schalter andererseits erfolgt mit einem vorkonfektionierten Kabel. An dem einen Ende dieses Kabels ist der Steckverbinder 110a angebracht, das andere Ende des Kabels wird mit Hilfe des Doseneinsatzes an den zugehörigen Schalter angeschlossen.

In Fig. 15 ist in Draufsicht ein Doseneinsatz 2a dargestellt, der in einer üblichen Schalterdose 4a aufgenommen ist. Beide Teile bestehen aus Isolierstoff. Oben in Fig. 15 ist durch einen Pfeil angedeutet, daß das von dem Steckverbinder 110a der Abzweigdose kommende Kabel in das Innere der Schalterdose 4a eingeführt wird. Auf der rechten Seite stehen von dem eine Bodenplatte aufweisenden Doseneinsatz fünf Leitungsanschlußelemente 6a ab. In der Mitte ist ein Steckverbinder 10a mit fünf Einstecklöchern für Kontaktelemente ausgebildet, und auf der linken Seite von dem Steckverbinder 10a befinden sich - symmetrisch zu den Leitungsanschlußelementen 6a - fünf weitere Leitungsanschlußelemente 8a.

Fig. 16 zeigt eine Schnittansicht entsprechend der Linie III-III in Fig. 15. Wie angedeutet, ist die Schalterdose 2a in eine Mauer Ma eingelassen. Die einzelnen fünf Leitungsdrähte des in Fig. 14 oben dargestellten Kabels Ka werden mit den rechts in Fig. 15 gezeigten fünf Leitungsanschlußelementen 6a elektrisch verbunden. Um ein elektrisch richtiges Verbinden zu gewährleisten, sind die Leitungsanschlußelemente 6a farblich codiert, was in Fig. 15 mit den Kleinbuchstaben "a", "b", ... angedeutet ist. Es handelt sich um die VDE-übliche Farbcodierung entsprechend den Codierungen der Isolierungen der einzelnen Leitungsdrähte.

An den Leitungsanschlußelementen 6a werden die Leitungsdrähte des ankommenden Kabels Ka angeschlossen. Man kann die Leitungen durchschleifen, indem man an den links in Fig. 15 gezeigten Leitungsanschlußelementen 8a in gleicher Weise die Enden eines abgehenden Kabels K'a anbringt. Wie in Fig. 16 zu sehen ist, können der Doseneinsatz 2a, die isolierenden Teile der Leitungsanschlußelemente 6a und 8a und die isolierenden Teile des Steckverbinders 10a aus einem Isolierstoffteil hergestellt sein. Wie aus Fig. 15 und 16 hervorgeht, sind die jeweils auf einer Linie liegenden Kontakte der Leitungsanschlußelemente und ein zwischen diesen befindliches Kontaktelement durch ein als einstückiges Stanzteil ausgeführtes Kontaktstück realisiert.

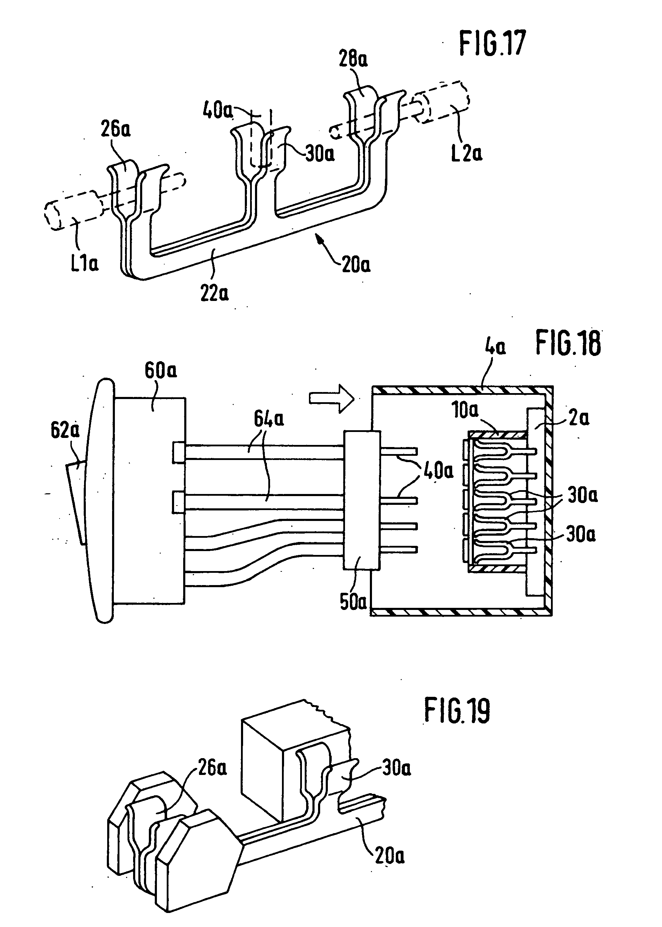

Fig. 17 zeigt ein solches Kontaktstück 20a in größerer Einzelheit. Durch Stanzen und Biegen zweier identischer Blechteile und durch Zusammenschweißen dieser Blechteile erhält man das Kontaktstück 20a, welches im Grundriß etwa die Form eines "E" besitzt. An den beiden äußeren Enden eines Stegs 22a schließen sich zwei Schenkel an, die an ihren Enden gabelförmig auseinanderlaufen, um Leitungsanschlußkontakte 26a und 28a zu bilden. Ein Mittelschenkel bildet einen Anschlußkontakt 30a, der genauso geformt ist wie die beiden Leitungsanschlußkontakte 26a und 28a.

In Fig. 17 angedeutet sind die elektrischen Verbindungen zwischen den Leitungsanschlußkontakten 26a und 28a mit zugehörigen Leitungsdrähten L1 bzw. L2. In den Kontaktanschluß 30a ist ein Steckkontaktstift 40a eines unten noch zu beschreibenden Steckverbinders 50a eingesteckt. Fünf der in Fig. 17 dargestellten Kontaktstücke 20a sind in das Isolierstoffgehäuse des Doseneinsatzes 2a eingesetzt. Das Anschließen der Leitungsanschlußkontakte 26a und 28a an die Leiterenden kann z. B. durch einfaches Eindrücken der abisolierten Aderenden in die nach oben offenen Leitungsanschlußkontakte geschehen. Der Kontaktanschluß 30a stellt einen Buchsenkontakt dar.

Nach dem Anschließen sämtlicher Leitungen des ankommenden Kabels Ka (und ggf. des abgehenden Kabels K'a) wird der Schalter 60a in der in Fig. 18 angedeuteten Weise montiert. Der mit einer Kunststofftaste 62a versehene Schalter 60a ist in einer Werkstatt vorkonfektioniert worden. Mit Hilfe kurzer Leitungsdrähte 64a wird eine Verbindung zu einem Steckverbinder 50a geschaffen. An der den Leitungsdrähten 64a abgewandten Seite des Gehäuses des Steckverbinders 50a treten die Adern der Leitungsdrähte aus und bilden Steckkontaktstifte 66a, die in die zugehörigen Buchsen-Kontaktanschlüsse 30a der Kontaktstücke 20a des Doseneinsatzes 2a eingesteckt werden, wie dies durch einen großen Pfeil in Fig. 18 angedeutet ist.

Man kann natürlich statt eines Schalters 60a auch eine Steckdose, einen Dimmer oder dergleichen in ähnlicher Weise anschließen. Die Steckverbinder 50a müssen nicht mit Leitungsdrähten an den Schaltern angebracht werden, möglich ist auch ein direktes Anbringen der Steckverbinder an den Schaltern.

Je nach Geräteart stehen von dem Steckverbinder 50a drei, vier oder fünf (oder noch mehr) Steckkontaktstifte 40a entsprechend den Leitungsdrähten 64a ab, und zwar in einer vorbestimmten Anordnung, die der jeweiligen Schaltart entspricht.

Fig. 19 zeigt schematisch einen kleinen Teil des Doseneinsatzes in einem Bereich, wo ein Kontaktstück 20a in den Doseneinsatz 2a so eingesetzt ist, daß sich die Leitungsanschlußkontakte 26a, 28a bzw. der Kontaktanschluß 30a an Teilen des Isolierstoffgehäuses abstützt.

Die Bemessung der einzelnen Kontaktanschlüsse 30a des Steckverbinders 10a und der Leitungsanschlußkontakte 26a, 28a entspricht dem Querschnitt der Leitungsdrähte, so daß eine gute elektrische Kontaktgabe gewährleistet ist.

In Fig. 19 nicht gezeigt ist die spezielle Ausgestaltung des Steckverbindergehäuseteils des Steckverbinders 10a. Vorzugsweise hat der Steckverbinder 10a auf seiner Oberseite Gehäuseöffnungen, welche sich direkt oberhalb der betreffenden Buchsen-Kontaktanschlüsse 30a befinden.

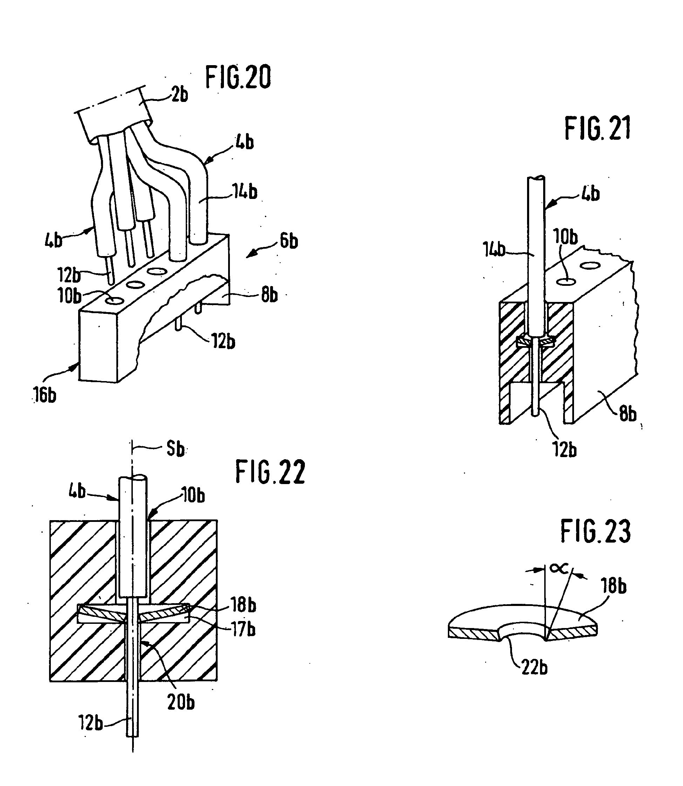

Der in Fig. 20 gezeigte Steckverbinder ähnelt dem Steckverbinder 27 aus Fig. 4. Der Steckverbinder 6b enthält ein aus üblichem Isolierstoff gefertigtes Isolierstoffgehäuse 16b in Form eines Parallelepipeds mit (gemäß Orientierung nach Fig. 21) nach unten abstehender Umfangs-Schutzwand 8b. Auf der Oberseite des Isolierstoffgehäuses 16b sind in regelmäßigen Abständen insgesamt fünf Leitungseinführöffnungen 10b ausgebildet.

Wie aus den Querschnitt-Darstellungen der Figuren 21 und 22 entnehmbar ist, erstrecken sich die einzelnen Leitungsaufnahmeöffnungen 10b von der Oberseite des Isolierstoffgehäuses 16b in den Körper des Isolierstoffgehäuses 16b hinein bis zu einer gewissen Tiefe, wo sich an die Leitungseinführöffhung 10 eine im Grundriß kreisförmige Kammer 17b zur Aufnahme einer Federstahl-Verriegelungsscheibe 18b anschließt.

Die Leitungseinführöffnung 10b und die Kammer 17b sind konzentrisch bezüglich einer Mittelachse Sb angeordnet. Ebenfalls konzentrisch zu dieser Mittelachse Sb angeordnet ist eine Aufnahmekammer 20b, die einen Teil eines abisolierten Endes einer massiven Kupferader 12b eines Leitungsdrahts 4b aufnimmt.

Wie in Fig. 20 gezeigt ist, ist ein Ende des Isoliermantels eines Kabels 2b entfernt, so daß insgesamt fünf Leitungsdrähte 4b freiliegen. Die jeweiligen Enden der Leitungsdrähte 4b sind von ihrer Isolierstoffhülle 14b befreit, so daß die blanken Enden der massiven Kupferadern 12b freiliegen und in das Isolierstoffgehäuse 16b des Steckverbinders 6b eingesteckt werden können. Nach dem Bestücken des Steckverbinders 6b in der in Fig. 20 angedeuteten Weise stehen die Enden der Adern 12b von der Unterseite des Isolierstoffgehäuses 16b in dem durch die Umfangs-Schutzwand 8b definierten Bereich ab. Die abisolierten Enden der Adern 12b dienen als Steckkontaktstifte, die mit hier nicht dargestellten Kontaktbuchsen eines ebenfalls nicht dargestellten Buchsenteils eines komplementären Steckverbinders zusammengesteckt werden.

In Fig. 20 nicht dargestellt ist eine farbliche Codierung am Isolierstoffgehäuse 16b, die dem Monteur anzeigt, welche abisolierten Leitungsdrähte 4b in welche Leitungseinführöffnungen 10b des Steckverbinders 6b gehören.

Es brauchen nicht sämtliche Kammern innerhalb eines Steckverbinders 6b belegt zu werden. Auch die hier nur als Beispiel dienende Anzahl von fünf Kammern kann erhöht werden, so daß durch unterschiedliche Belegung der einzelnen Kammern eine "Programmierung" für entsprechend programmierte komplementäre Buchsen-Steckverbinder möglich ist.

Das Abisolieren der Leitungsdrähte 4b erfolgt vorzugsweise bis zu einer solchen Länge, daß die Stirnflächen der Isolierstoffhüllen 14b bei eingestecktem Leitungsdraht auf den betreffenden Federstahl-Verriegelungsringen 18b in den Kammern 17b aufliegen. Die Enden der Adern können aber auch über eine etwas größere Länge freigelegt werden, so daß sich zwischen der Verriegelungsscheibe 18b und der dieser gegenüberliegenden Stirnseite der Isolierstoffhülle 14b ein geringer Abstand einstellt, wie dies in Fig. 22 angedeutet ist. Der Griff der Federstahl-Verriegelungsscheibe 18b am Außenumfang der Ader 12b ist stark genug, um bei den üblicherweise zu erwartenden Längskräften in dem jeweiligen Leitungsdraht dessen Verrutschen innerhalb des Isolierstoffgehäuses 16 zu verhindern.

Fig. 23 zeigt in einer teilweise geschnittenen perspektivischen Darstellung einen Federstahl-Verriegelungsring 18b, der als Zugentlastung für die einzelnen Leitungsdrähte in das Isolierstoffgehäuse für jeden Leitungsdraht eingeformt ist.

In der Mitte der Verriegelungsscheibe 18b befindet sich ein Loch mit einem - in Einsteckrichtung - unteren Umfangsrand 22b, der einen Kreis definiert, der einen etwas geringeren Durchmesser besitzt als die Adern 12b der einzelnen Leitungsdrähte 4b, so daß sich die Adern einerseits relativ leicht durch die Verriegelungsscheiben drücken lassen, andererseits sich dabei aber nicht biegen.

Bei der Ausführungsform nach den Figuren 20 bis 23 haben die Adern 12b der einzelnen Leitungsdrähte 4b des fünfadrigen Kabels 2b einen Durchmesser von 1,0 mm und bestehen aus massivem Kupfer. Es hat sich gezeigt, daß bei dieser Art von Adern der Leitungsdrähte ein problemfreies Zusammenstecken des Steckverbinders mit der dazugehörigen Buchse bei insgesamt fünf Leitungsdrähten möglich ist.

Im folgenden sollen Ausführungsbeispiele einer Kontaktplatte in Verbindung mit einer Gebäude-Elektroinstallation beschrieben werden, obschon sich versteht, daß die Kontaktplatte (und die eine solche Kontaktplatte enthaltende Steckverbinderanordnung) nicht auf einen solchen speziellen Anwendungsfall beschränkt ist.

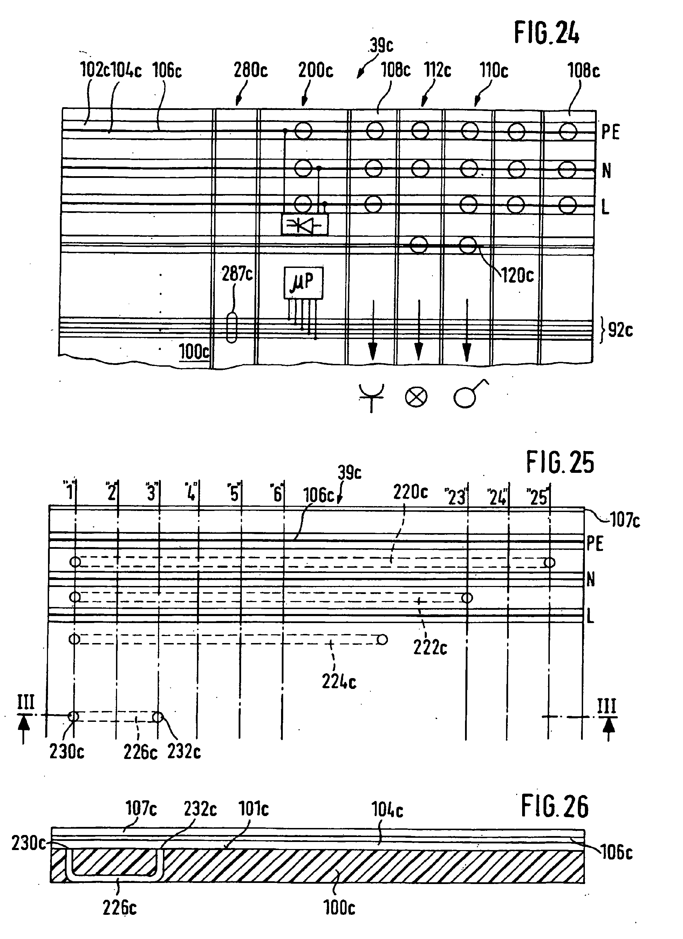

Fig. 24 zeigt noch einmal schematisch den Grundriß einer Abzweigdose einer Elektroinstallation. Die Abzweigdose enthält eine Steckverbinderanordnung mit einem Isolierstoffgehäuse. Fig. 24 zeigt teilweise eine Kontaktplatte 39c einer solchen Steckverbinderanordnung für eine Abzweigdose. Die Kontaktplatte enthält eine aus Isolierstoff bestehende Grundplatte 100c, auf der sich von links nach rechts durchgehend Leisten 102c und 104c mit einem gewissen Zwischenabstand erstrecken, um zwischen sich jeweils ein Kontaktmesser 106c aufzunehmen.

Es sind mehrere durchgehende Kontaktmesser 106c vorgesehen, jeweils einer für Schutzleiter, Nulleiter und Phasenleiter (PE, N, L). Auf die Leisten und die Kontaktmesser sind Steckverbinder 108c aufgesteckt, die an den mit einem Kreis bezeichneten Stellen elektrischen Kontakt mit den betreffenden Kontaktmessern haben. An den Steckverbindern gehen Leitungen zu beispielsweise einem Deckenauslaß (Steckverbinder 112c) oder zum einem Schalter (Steckverbinder 110c). Die entsprechenden Symbole für die Steckverbinder 112c und 110c sind unten in Fig. 24 dargestellt. Die beiden benachbart angeordneten Steckverbinder enthalten ein kurzes Kontaktmesser 120c. Die von den beiden Steckverbindern 110c und 120c abgehenden Leitungen führen zu einem Schalter bzw. zu einem Deckenauslaß für eine Lampe.

Wird der Schaltkontakt in dem Schalter geschlossen, so fließt elektrischer Strom von dem Schalter über das kurze Kontaktmesser 120c zu dem Verbraucher (Lampe).

Die Verbindung zwischen der in Fig. 24 dargestellten Kontaktplatte 39c einerseits und dem Schalter andererseits erfolgt mit einem vorkonfektionierten Kabel. An dem einen Ende des Kabels ist der Steckverbinder 110c angebracht, das andere Ende des Kabels trägt einen ähnlichen Steckverbinder oder wird vom Installateur abisoliert und an den zugehörigen Kontakten angeschlossen.

Der oben angesprochene Steckverbinder 108c wird hier allgemein als "Bauteil" angesprochen, da er - zumindest was seine mechanischelektrischen Eigenschaften angeht - eine ähnliche Funktion hat wie weitere in Fig. 25 dargestellte Bauteile, nämlich ein Aktor 200c und ein Buskoppler 280c. Bei dem Aktor 200c handelt es sich um ein aktives Bauelement, im vorliegenden Beispiel um einen von einem Mikroprozessor gesteuerten Aktor zum Betätigen eines Motors mit Hilfe einer Thyristorschaltung.

Die Information zum Betreiben des in Fig. 24 nicht dargestellten Motors mit Hilfe des Aktors 200c erhält dieser über einen Informationsbus 92c, der im unteren Teil der Fig. 24 dargestellt ist. Über diesen fünfadrigen Informationsbus 92c werden Informationssignale zum Steuern verschiedener Aktoren, Sensoren und dergleichen übertragen. Im vorliegenden Beispiel überträgt der Informationsfbus 92c elektrische Signale. Diese Signale werden in einen in dem Aktor 200c enthaltenen Mikroprozessor (*µ*P) übertragen, dort verarbeitet in Steuersignale für eine Thyristorschaltung. Von den Kontaktmessern 106c für die Leiter PE, N und L nimmt der Aktor 200c die elektrische Leistung und gibt sie in dosierter Weise an einen hier nicht dargestellten Motor, und die Kabelverbindung zu dem Motor erfolgt ebenfalls über ein vorkonfektioniertes Kabel, welches auf das Aktor-Bauteil 20c mit einem Ende aufgesteckt ist.

Die Signalverarbeitung innerhalb des in Fig. 24 dargestellten Aktor-Bauteils 200c erfolgt elektrisch. Die übliche Spannung von z. B. 5 Volt wird von den Leitern PE, N und L mit Hilfe eines Netzteils bereitgestellt. Betrachtet man Fig. 24, so ragt das Bauteil 200c aus der Zeichnungsebene heraus. Die in dem mit einem Isolierstoffgehäuse ausgestatteten Bauteil durchgeführten Signalverarbeitungsvorgänge werden von den spannungsführenden Kontaktmessern 106c kaum beeinflußt.

Allerdings könnte es Probleme geben, wenn die 5-Volt-Signale von einem Bauteil auf der Kontaktplatte 39c zu einem anderen Bauteil auf der Kontaktplatte 39c übertragen werden sollen. Die durch die 220-Volt-Spannung verursachten elektrischen Felder könnten die Informationssignale derart verfälschen, daß die gesamte Signalverarbeitung gestört wird, falls diese Signale elektrische Signale wären, die über z. B. Kupferleitungen übertragen würden.

Fig. 25 zeigt eine ähnliche Ansicht wie Fig. 24, wobei jedoch die Bauteile 108c, 110c, 112c, 200c und 280c aus Fig. 24 weggelassen sind. Stattdessen sind in Fig. 25 Lichtleiterfasern (oder einfach: Lichtleiter) 220c, 222c, 224c und 226c dargestellt, die in die Grundplatte 100c eingebettet sind.

Fig. 26 zeigt eine Schnittansicht entsprechend der Linie III-III in Fig. 25. Man erkennt, daß der Lichtleiter 226c die Form eines "U" aufweist, wobei die Enden des als transparente Kunststoffaser ausgebildeten Lichtleiters 226c bündig mit der Oberseite 101c der Grundplatte 100c abschließen. Während die Grundplatte 100c selbst aus nicht-transparentem PVC besteht, bestehen die Lichtleiter 220c bis 226c jeweils aus transparenten Kunststoffasern, beispielsweise aus Crofon. Die einzelnen Lichtleiter 220c bis 226c verlaufen mittig in Reihenrichtung (senkrecht zu den mit "1", "2", "3" ... bezeichneten Steckplätzen) auf der Kontaktplatte 39c. Jeweils links in Fig. 25 dargestellte Stirnflächen der Lichtleiter 220c bis 226c münden in dem Steckplatz "1". Die anderen Enden münden in jeweils unterschiedlichen Steckplätzen. Möglich ist also eine optische Verbindung von dem Steckplatz "1" aus zu den Steckplätzen 3c, 23c und 25c (und weiteren, in Fig. 25 nicht näher bezeichneten Steckplätzen): Dementsprechend ist auch auf indirektem Weg eine optische Verbindung beispielsweise von dem Steckplatz "25" über den Steckplatz "1" zu dem Steckplatz "23" möglich.

Fig. 26 zeigt, daß die beiden Enden, d. h. die beiden Stirnflächen 230c und 232c des Lichtleiters 226c bündig mit der Oberseite 101c der Grundplatte 100c abschließen. Gemäß der Darstellung der Fig. 26 erkennt man dort auch noch eine Leiste 104c, ein Kontaktmesser 106c und einen Außenrand 107c der Grundplatte 100c.

In Fig. 24 ist links von dem Aktor-Bauelement 200c ein weiteres Bauelement 280c dargestellt. Dieses Bauelement dient z. B. als Buskoppler. Es kontaktiert bei 287c die fünf Kupferadern des Informationsbusses 92c, es enthält ein kleines Netzteil, um aus der 220-Volt-Spannung eine Spannung von z. B. 5 Volt zu bilden, um mit Hilfe dieser Spannung die elektrischen Signale von dem Informationsbus 92c umzuwandeln in optische Signale, damit die Informationssignale in Form von optischen Signalen an das Aktor-Bauelement 200c gegeben werden.

Von dem Buskoppler 280c geht eine (elektrische) Busleitung über ein Kabel zu einer anderen Kontaktplatte.

Wie oben angedeutet, kann der elektrische Bus 92c auch als optischer Bus ausgebildet sein. Die optischen Signale von dem Bus gelangen dann über den Buskoppler an die die Signale verarbeitenden Bauteile, beispielsweise das Aktor-Bauteil 200c.

Durch die Übertragung der Signale in Form von optischen Signalen im Bereich der Kontaktplatte 39c wird verhindert, daß es zu einer Signalstörung aufgrund elektrischer Felder durch die 220-Volt-Leitungen kommt.

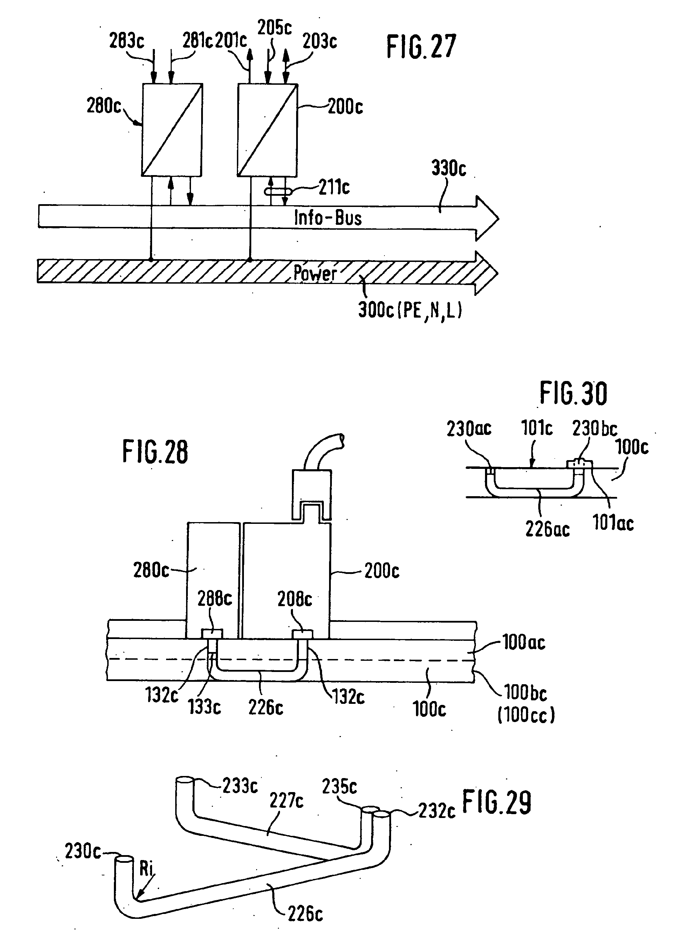

Fig. 27 zeigt schematisch die im Bereich einer Kontaktplatte zur Verfügung stehenden Komponenten. Die üblichen Spannungsversorgungsleitungen sind hier als Busleitung (POWER) 300c dargestellt. Die Bauteile 200c und 280c sind beide mit dem "POWER"-Bus 300c verbunden.

Außerdem ist ein Informationsbus (INFO-Bus) 330c dargestellt. Gebildet wird dieser durch die Lichtleiter 220c-226c, oder durch einen dieser Lichtleiter. Von diesem Bus können entweder elektrische oder optische Informationssignale in beide Richtungen übertragen werden. Das Bauteil 200c ist an den Informationsbus 330c mit einer bidirektionalen Verbindung 211c angekoppelt. Empfängt das Bauteil 200c z. B. optische Signale über die Ankopplung 211c, so kann es diese optischen Signale mit Hilfe eines internen Netzteils und eines geeigneten Schaltungsteils umsetzen in elektrische Signale, beispielsweise Thyristor-Steuersignale, um dann elektrische Treibersignale über eine abgehende Leitung 201c an einen Motor oder dergleichen zu geben.

Das in Fig. 27 dargestellte Bauteil 200c kann z. B. auch ein Sensor-Bauteil sein. In diesem Fall würde das Sensor-Bauteil über eine Leitung 205c Signale empfangen, um sie intern zu verarbeiten und auf den Info-Bus 330c zu koppeln.

Das links in Fig. 27 dargestellte Busankoppel-Bauteil 280c ist über den Info-Bus 330c mit dem Aktor-Bauelement 200c verbunden. Erfindungsgemäß ist dieser Info-Bus 330c durch mindestens einen Lichtwellenleiter ausgebildet, im vorliegenden Fall durch den Lichtwellenleiter 226c, der in Fig. 28 ähnlich wie in Fig. 26 dargestellt ist.

Die auf den Info-Bus 330c der Kontaktplatte gegebenen Signale kommen von dem in Fig. 24 dargestellten Bus 92c. Links oben sind an dem Bauteil 280c zwei Eingänge dargestellt, ein Eingang 281c für optische Signale und ein Eingang 283c für elektrische Signale. Mit einer ähnlichen Verbindung können die Signale von der jeweiligen Kontaktplatte auf ein Bus-Kabel gegeben werden, um eine Verbindung zu einer anderen Abzweigdose zu schaffen.

Rechts in Fig. 27 ist an dem Bauteil 200c noch eine optische, bidirektionale Verbindung 203c dargestellt. Von dem Aktor-Bauelement 200c können auch Signale in Form optischer Signale abgegeben oder empfangen werden.

Fig. 28 zeigt die auf zwei Steckplätzen sitzenden Bauteile 200c und 280c. In deren Boden befinden sich optoelektronische Koppelelemente 208c bzw. 288c, die als Sender und Empfänger ausgebildet sind, um optische Signale über den Lichtwellenleiter 226c zu empfangen oder auszusenden.

Fig. 29 zeigt in perspektivischer Darstellung den in Fig. 26 und Fig. 28 dargestellten Lichtwellenleiter 226c mit etwa U-förmiger Gestalt. Die beiden Stirnflächen 230c und 232c werden in die Spritzgießform so eingesetzt, daß sie etwa mit der zu bildenden Oberseite der Grundplatte 100c übereinstimmen. Das gesamte in Fig. 29 dargestellte Teil wird dann mit dem Material der Grundplatte 100c umspritzt.

Der Krümmungsradius Ri in Fig. 29 beträgt im vorliegenden Fall 3 mm. Der Lichtleiter 226c selbst ist z. B. eine transparente Crofon-Faser, also ein kostengünstiges Bauteil, dessen Herstellung und Weiterverarbeitung ohne großen Kostenaufwand möglich ist. Wegen der kurzen Übertragungsstrecke für die optischen Signale stört eine nicht unbeträchtliche Dämpfung dieses Materials nicht.

In Abwandlung der oben beschriebenen Ausführungsform können die Lichteintritts- und Lichtaustrittsenden der einzelnen Lichtleiter auch gegenüber der Oberseite der Grundplatte 100c nach außen oder nach innen versetzt angeordnet werden. Dies ist in Fig. 30 gezeigt. In Fig. 30 ist die links dargestellte Stirnfläche 230ac eines Lichtleiters 226ac gegenüber der Oberseite 101c der Grundplatte 100c nach innen versetzt. Die rechte Stirnfläche ist ebenfalls nach innen versetzt. Die beiden Stirnflächen des Lichtleiters 226ac können aber auch über die Oberseite 101c der Grundplatte 100c nach außen vorstehen, wie das rechts in Fig. 30 für die Stirnfläche 230bc dargestellt ist. Dort ist auch ein mit der Grundplatte 100c einstückiger Kragen 101ac zum Schutz des Faserendes dargestellt.

Bei dem oben beschriebenen Ausführungsbeispiel verlaufen sämtliche Lichtleiter parallel zu den Kontaktmessern, definitionsgemäß in Reihenrichtung. Man kann die Lichtleiter aber auch praktisch beliebig in Spaltenrichtung oder in beliebigem Winkel bezüglich der Reihenrichtung verlegen. Das Anordnen einzelner Lichtleiter ist auch von Hand in beliebiger Weise möglich. Man kann also individuell bestückte Kontaktplatten herstellen, wobei die Bestückung einer "Codierung" entspricht. Diese "Codierung" kann man in der Weise vornehmen, daß unterschiedliche optische Verbindungen für unterschiedliche Bauelemente hergestellt werden. Betrachtet man einen Steckplatz und dessen Verbindungen zu anderen Steckplätzen, so kann man die Codierung in der Weise gestalten, daß bei einem bestimmten Bauelement eine erste Funktion auf diesem erstgenannten Steckplatz realisiert wird, während mit einem anderen Bauelement - ohne etwas an der Kontaktplatte zu ändern - eine andere Funktion erreicht wird.

In der Praxis würde dann eine an möglichen Ein-/Auskoppelstellen jeweils mit einer Bohrung vorgefertigte Grundplatte von Hand mit Lichtleitern bestückt. Auf der Rückseite der Grundplatte würden dann die Mittelbereiche der U-förmigen einzelnen Lichtleiterfasern verlaufen. Um die Fasern fest an der Grundplatte zu halten, würde dann die Rückseite der Grundplatte mit Kunststoff umspritzt.

Dies ist in Fig. 28 angedeutet. Dort ist die Grundplatte 100c zweiteilig mit einer ersten Platte 100ac und einer zweiten Platte 100bc dargestellt. Zum Bestücken würden die Lichtleiter, beispielsweise der Lichtleiter 226c, mit den jeweiligen Enden in die vorgebohrten Löcher der oberen Grundplatte 100ac eingesetzt. Nach Verlegen sämtlicher Lichtleiterfasern würde dann die Unterseite der oberen Grundplatte 100ac mit einer unteren Platte 100bc durch Umspritzen ergänzt.

In einer weiteren Abwandlung kann man eine einheitliche erste Grundplatte 100ac mit einem Matrix-Muster an Bohrungen 132c (Fig. 28) herstellen, wobei in jeder Bohrung ein Lichtleiterstift 122c sitzt. Die "Verschaltung" erfolgt dann mittels einer weiteren Platte 100cc, die unten an die Platte 100ac so angesetzt wird, daß die darin eingebetteten Lichtleiter (ähnlich dem Lichtleiter 226c in Fig. 28) die optischen Verbindungen zwischen den gewünschten Punkten der Matrix herstellen. Hierdurch wird der Fertigungsprozeß billiger, da die obere Grundplatte 100ac für sämtliche Anwendungen einheitlich ausgebildet ist.

In einer weiteren Abwandlung der oben beschriebenen Ausführungsform kann man vorsehen, daß von einer Stelle aus eine Abzweigung mit Hilfe mehrerer Lichtleiter erfolgt. Dies ist in Fig. 29 angedeutet. Benachbart zu der Stirnfläche 232c des Lichtleiters 226c befindet sich eine Stirnfläche 235c eines weiteren Lichtleiters 227c, dessen andere Stirnfläche 233c zu irgendeinem Punkt der Kontaktplatte führt. Man kann in die beiden Lichteintrittsfläche 232c und 235c identische Lichtsignale mit einem einzigen Bauelement einkoppeln, so daß diese Lichtsignale dann an verschiedenen Stellen über die Lichtaustrittsflächen 230c und 233c der Lichtleiter 226c bzw. 227c zur Verfügung stehen.

## Patentansprüche

1. Steckverbinderdose für die Elektroinstallation eines Gebäudes oder eines Teils eines Gebäudes, aufweisend folgende Merkmale:
(a) ein Bodenteil (33) mit einer Kontaktplatte (39), in der mehrere Reihen elektrischer Kontaktmesser (65; 69) gehaltert sind, wobei bestimmte Reihen durchgängig elektrisch miteinander verbunden sind für den Anschluss an Phasenleiter (L), Nullleiter (N) etc. und wobei gegebenenfalls in anderen Reihen abschnittsweise Kontaktmesser (69) vorhanden sind;
(b) mehrere, quer zu den Reihen verlaufende Steckplätze (83; 85), für Schaltartelemente (71; 81; 90; 91; 102);
(c) mehrere Schaltartelemente (71; 81; 90; 91; 102) sind an Schaltplätzen eingesteckt und stellen einerseits Kontakt zu Kontaktmessern (65; 69) her und sind andererseits elektrisch mit Leistungsdrähten (21; 23; 25) verbunden;
(d) so dass durch die Anordnung von Kontaktplatte (39) und eingesteckten Schaltartelementen (71; 81; 90; 91; 102) eine Kontaktstellen-Matrix geschaffen wird, von der die Kontaktmesser (65; 69) die Reihen und die Schaltartelemente (71; 81; 90; 91; 102) die Spalten bilden, wobei zwischen den Kontaktmessern (65; 69) und den Leitungsdrähten (21; 23; 25) selektive Verbindungen hergestellt werden können;
(e) und ein Oberteil (35);
(f) wobei zwischen dem Bodenteil (33) und dem Oberteil (35) Durchgangsöffnungen (45; 49) für zugehende und abgehende Leitungsabschnitte (19) ausgebildet sind.

2. Steckerverbinderdose nach Anspruch 1,
**dadurch gekennzeichnet, dass** derart ausgebildete Schaltartelemente (71; 81; 90; 91; 102) vorgesehen sind, dass mit Leitungsdrähten (21; 23; 25) verbundene Steckverbinder (27) einsteckbar sind.

3. Steckverbinderdose nach Anspruch 1,
**dadurch gekennzeichnet, dass** derart ausgebildete Schaltartelemente vorgesehen sind, dass die Schaltartelemente selbst mit Leitungsdrähten verbundene Steckverbinder bilden.

4. Steckverbinderdose nach einem der Ansprüche 1 bis 3,
**dadurch gekennzeichnet, dass** die Kontaktplatte (39) eine Busleitung (92) aufweist und dass Steckplätze für aktive Schaltartelemente (90; 102) vorgesehen sind, die im eingesteckten Zustand Busleitungskontakt herstellen.

5. Steckverbinderdose nach Anspruch 4,
**dadurch gekennzeichnet, dass** Aktorelemente und/oder Sensorelemente als aktive Schaltartelemente (90; 102) vorgesehen sind.

6. Steckverbinderdose nach einem der Ansprüche 1 bis 5, **dadurch gekennzeichnet, daß** die Durchgangsöffnungen durch paarweise zusammengehörige, halbkreisförmige Ausnehmungen (45, 49) im Bodenteil (33) und im Oberteil (35) gebildet sind.

7. Steckverbinderdose nach einem der Ansprüche 1 bis 6, **dadurch gekennzeichnet, daß** die Durchgangsöffnungen (45; 49) durch Sollbruchstellen (47) in einer Seitenwand der Steckverbinderdose (31) definiert sind.

8. Steckverbinderdose nach einem der Ansprüche 1 bis 7, **dadurch gekennzeichnet, daß** das Oberteil (35) auf das Bodenteil (33) aufschnappbar ist.

9. Steckverbinderdose nach einem der Ansprüche 1 bis 8, **dadurch gekennzeichnet, daß** das Oberteil (35) aus einem beidseitig offenen Rahmen gebildet wird, auf dessen Außenseite ein Deckel (37; 37') anbringbar ist.

10. Steckverbinderdose nach einem der Ansprüche 1 bis 9, **dadurch gekennzeichnet, dass** Leitungs- Steckverbinder (27) einerseits und Steckplätze in der Steckverbinderdose (31) andererseits eine mechanische, elektrische oder farbige Codierung haben, die nur eine einzige Verbindung zwischen einem Leitungsabschnitt-Steckverbinder (27) und einem Steckplatz in dieser Steckverbinderdose (31) zuläßt.

11. Steckverbinderdose nach einem der Ansprüche 1 bis 10,
**dadurch gekennzeichnet, dass** mehrere, in Reihenrichtung benachbarte Kontaktplatten (39) und ein die beiden Kontaktplatten (39) koppelndes Doppel-Schaltartelement (110) vorgesehen sind.

12. Steckverbinderdose nach einem der Ansprüche 1 bis 11,
**dadurch gekennzeichnet, dass** in der Kontaktplatte (39c) ein Lichtleiter (220c; 222c; 224c; 226c; 227c; 330c) vorgesehen ist und dass derart ausgebildete Schaltartelemente (200c; 280c) vorgesehen sind, dass optische Signale zwischen dem Lichtleiter und dem Schaltartelement übertragbar sind.

13. Steckverbinderdose nach Anspruch 12,
**dadurch gekennzeichnet, dass** der Lichtleiter (220c; 222c; 224c; 226c; 227c) U-förmige Gestalt hat.

14. Steckverbinderdose nach Anspruch 12 oder 13,
**dadurch gekennzeichnet, dass** der Lichtleiter (330c) ein optischer Datenbus ist.

15. Bausatz für die Elektroinstallation eines Gebäudes oder eines Teils eines Gebäudes, aufweisend Kontaktstellenmatrix-Steckverbinderdosen (31), die gemäß einem der Ansprüche 1 bis 14 ausgebildet sind, und ferner aufweisend:
(a) einen Ausführungsplan, aus dem die Art und die exakte Lage sämtlicher Installationspunkte, das sind Punkte für Schalter, Steckdosen etc., sowie der Verlauf und die Länge sämtlicher Leitungsabschnitte (19) zwischen je zwei Installationspunkten entnehmbar sind, wobei die Installationspunkte und die Leitungsabschnitte (19) jeweils mit einer eindeutigen Bezeichnung, z. B. Positionsnummer, versehen sind; und
(b) eine Menge von mit Steckverbindern (27) vorkonfektionierten Leitungsabschnitten (19), jeweils mit Bezeichnung gemäß Ausführungsplan; wobei
(c) eine Menge von Steckverbinderdosen (4a; 31) für sämtliche Installationspunkte, jeweils mit Bezeichnung gemäß Ausführungsplan, vorgesehen ist.

16. Bausatz nach Anspruch 15, **gekennzeichnet durch**
(d) eine Menge von je mit Steckverbindern (50a) ausgestatteten Steckdosen und/oder Schaltern (60a) und/oder anderen Teilen, die an den Steckverbinderdosen anzubringen sind.

17. Bausatz nach Anspruch 15, oder 16,
**dadurch gekennzeichnet, dass** Steckverbinderdosen (4a) vorgesehen sind, die mehrere Kontaktstücke (20a) enthalten, welche an Leitungsdrähte (L1; L2) angeschlossen sind und welche die der Steckverbinderdose (4a) zugeordnete Seite der Steckverbindungen (30a; 50a) der Steckverbinderdose (4a) bilden.

18. Bausatz nach Anspruch 17,
**dadurch gekennzeichnet, dass** die Kontaktstücke (20a) eine Codierung, insbesondere eine farbliche Codierung, besitzen.

19. Bausatz nach einem der Ansprüche 15 bis 18,
**dadurch gekennzeichnet, dass** Steckverbinder (6b) vorgesehen sind, die ein Isolierstoffgehäuse (16b) und davon abstehende, von den Aderenden der eingeführten Leitungsdrähte (4b) gebildete Steckkontaktstifte (12b) aufweisen.

20. Bausatz nach Anspruch 19,
**dadurch gekennzeichnet, dass** für jeden Leitungsdraht (4b) eine als Zugentlastung dienende Verriegelungseinrichtung, vorzugsweies ausgebildet als Verriegelungsscheibe (18b) aus Federstahl, vorgesehen ist.

21. Verfahren zum Ausführen einer Elektroinstallation in einem Gebäude oder einem Teil eines Gebäudes, unter Verwendung eines Bausatzes gemäß einem der Ansprüche 15 bis 20, **gekennzeichnet durch** folgende Schritte:
(a) ausgehend von einem Bauplan des Gebäudes bzw. des Teils des Gebäudes wird anhand von individuellen Vorgaben seitens eines Kunden ein Ausführungsplan erstellt, aus dem die Art und die exakte Lage sämtlicher Installationspunkte, das sind Punkte für Schalter, Steckdosen etc., sowie der Verlauf und die Länge sämtlicher Leitungsabschnitte (19) zwischen je zwei Installationspunkten entnehmbar sind, wobei die Installationspunkte und die Leitungsabschnitte (19) jeweils mit einer eindeutigen Bezeichnung, z. B. Positionsnummer, versehen sind,
(b) mit Hilfe des Ausführungsplans wird eine Stückliste erstellt für
(b1) die Leitungsabschnitte (19); und
(b2) die an den Installationspunkten zu montierenden Bauteile in Form von Steckverbinderdosen (4a; 31);
(c) es wird der Bausatz gemäß einem der Ansprüche 15 bis 20 erstellt;
(d) und mit Hilfe des Ausführungsplans erfolgen die Montage der Teile des Bausatzes und die elektrische Verbindung zwischen den Enden der Leitungsabschnitte (19) und den Steckverbinderdosen (4a; 31).

22. Verfahren nach Anspruch 21, **dadurch gekennzeichnet, daß** der Ausführungsplan einen Grundriß (1) und eine Wandabwicklung (15) beinhaltet, die jeweils Symbole für die an den Installationspunkten zu montierenden Bauteile und Bemaßungen für den Leitungsverlauf enthalten.

23. Verfahren nach Anspruch 21 oder 22, **dadurch gekennzeichnet, daß** der Bausatz in mehren, jeweils nacheinander zugänglichen Bereichen eines Behälters (B) plaziert wird, wobei die Reihenfolge der Zugänglichkeit der einzelnen Bereiche der Reihenfolge der Montage der Bausatz-Bestandteile im Gebäude entspricht.

24. Verfahren nach einem der Ansprüche 21 bis 23, **dadurch gekennzeichnet, daß** mindestens einer der Schritte (a) und (b) mit Hilfe eines Rechenprogramms ausgeführt wird.

25. Verfahren nach einem der Ansprüche 21 bis 24, **dadurch gekennzeichnet, daß** zusätzlich in den Ausführungsplan die Verlegung eines Informationsübertragungsbusses (92) einbezogen wird, wobei dieser Bus (92) mittels vorkonfektionierter Busleitungen über vorbestimmte Steckverbinderdosen (31) geführt wird.

## Claims

1. A plug-type connector socket for the electrical installation in a building or part of a building, comprising:
(a) a bottom part (33) having a contact plate (39) supporting therein a plurality of rows of electric contact blades (65; 69), with certain rows being electrically connected to each other throughout for being connected to phase conductors (L), neutral conductors (N) etc., and other rows being optionally provided in sections with contact blades (69);
(b) a plurality of plug-in positions (83; 85) for connection-manner elements (71; 81; 90; 91; 102) arranged transversely of said rows;
(c) a plurality of connection-manner elements (71; 81; 90; 91; 102) are inserted in the plug-in positions and on the one hand establishe contact with contact blades (65; 69) and on the other hand are electrically connected to line wires (21; 23; 25);
(d) such that, due to the arrangement of contact plate (39) and inserted connection-manner elements (71; 81; 90; 91; 102), a contact position matrix is created in which the contact blades (65; 69) constitute the rows and the connection-manner elements (71; 81; 90; 91; 102) constitute the columns, with the possibility of establishing selective connections between the contact blades (65; 69) and the line wires (21; 23; 25);
(e) and a top part (35);
(f) with through openings (45; 49) being formed between the bottom part (33) and the top part (35) for ingoing and outgoing line sections (19).

2. A plug-type connector socket according to claim 1,
**characterized in that** connection-manner elements (71; 81; 90; 91; 102) of such design are provided that plug-type connectors (27) connected to line wires (21, 23, 25) can be inserted thereinto.

3. A plug-type connector socket according to claim 1,
**characterized in that** connection-manner elements of such design are provided that the connection-manner elements themselves constitute plug-type connectors connected to line wires.

4. A plug-type connector socket according to any of claims 1 to 3,
**characterized in that** the contact plate (39) comprises a bus line (92) and that plug-in positions for active connection-manner elements (90; 102) are provided, establishing bus line contact in the inserted state.

5. A plug-type connector socket according to claim 4,
**characterized in that** actuator elements and/or sensor elements are provided as active connection-manner elements (90; 102).

6. A plug-type connector socket according to any of claims 1 to 5,
**characterized in that** the through-openings are formed by semicircular recesses (45, 49) in the bottom part (33) and in the top part (35) associated with each other in pairs.

7. A plug-type connector socket according to any of claims 1 to 6,
**characterized in that** the through-openings (45; 49) are defined by nominal rupture positions (47) in a sidewall of the plug-type connector socket (31).

8. A plug-type connector socket according to any of claims 1 to 7,
**characterized in that** the top part (35) is adapted to be snap-mounted on the bottom part (33).

9. A plug-type connector socket according to any of claims 1 to 8,
**characterized in that** the top part (35) is formed of a bilaterally open frame on the outside of which a lid (37; 37') can be mounted.

10. A plug-type connector socket according to any of claims 1 to 9,
**characterized in that** line connectors (27) on the one hand and plug-in positions in the plug-type connector socket (31) on the other hand are provided with a mechanical, electrical or color coding permitting only one single connection between a line section connector (27) and a plug-in position in this plug-type connector socket (31).

11. A plug-type connector socket according to any of claims 1 to 10,
**characterized in that** there is provided a plurality of adjacent contact plates (39) and a double connection-manner element (110) coupling said two contact plates (39).

12. A plug-type connector socket according to any of claims 1 to 11,
**characterized in that** the contact plate (39c) has an optical waveguide (220c; 222c; 224c; 226c; 227c; 330c) provided therein, and that connection-manner elements (200c; 280c) of such design are provided that optical signals can be transmitted between the optical waveguide and the connection-manner element.

13. A plug-type connector socket according to claim 12,
**characterized in that** the optical waveguide (220c; 222c; 224c; 226c; 227c) is U-shaped.

14. A plug-type connector socket according to claims 12 or 13,
**characterized in that** the optical waveguide (330c) is an optical data bus.

15. A kit for the electrical installation in a building or part of a building, comprising contact position matrix plug-type connector sockets (31) designed according to any of claims 1 to 14, and comprising furthermore:
(a) an installation plan revealing the kind and the exact position of all installation points, i.e. points for switches, sockets etc., as well as the course and the length of all line sections (19) between two installation points each, the installation points and the line sections (19) each being provided with an unequivocal designation, e.g. a position number; and
(b) a quantity of line sections (19) prefabricated with connectors (27) and each provided with a designation according to installation plan; wherein
(c) a quantity of plug-type connector sockets (4a; 31) for all installation points is provided, each provided with a designation according to installation plan.

16. A kit according to claim 15,
**characterized by**
(d) a quantity of sockets and/or switches (60a) and/or other parts each provided with plug-type connectors (50a) and adapted to be attached to the plug-type connector sockets.

17. A kit according to claim 15 or 16,
**characterized in that** plug-type connector sockets (4a) are provided containing a plurality of contact members (20a) terminated to line wires (L1; L2) and constituting the side of the plug-type connections (30a; 50a) of the plug-type connector socket (4a) that is associated with the plug-type connector socket (4a).

18. A kit according to claim 17,
**characterized in that** the contact members (20a) are provided with a coding, in particular a color coding.

19. A kit according to any of claims 15 to 18,
**characterized in that** plug-type connectors (6b) are provided having an insulating material housing (16b) as well as contact pins (12b) projecting therefrom and constituted by the conductor ends of the inserted line wires (4b).

20. A kit according to claim 19,
**characterized in that**, for each line wire (4b), there is provided a locking means serving as strain-relief means and being preferably in the form of a locking disc (18b) of spring steel.

21. A method of performing an electrical installation in a building or part of a building making use of a kit according to any of claims 15 to 20,
**characterized by** the following steps:
(a) on the basis of a building plan of the building or part of the building, an installation plan is prepared considering individual requirements of a customer, said installation plan revealing the kind and exact position of all installation points, i.e. points for switches, sockets etc., as well as the course and length of all line sections (19) between two installation points each, the installation points and line sections (19) being each provided with an unequivocal designation, e.g. a position number,
(b) with the aid of the installation plan, a parts list is prepared for
(b1) the line sections (19); and
(b2) the components in the form of plug-type connector sockets (4a; 31) to be mounted at the installation points;
(c) the kit according to any of claims 15 to 20 is prepared;
(d) and with the aid of the installation plan, the parts of the kit are assembled and the electrical connection is established between the ends of the line sections (19) and the plug-type connector sockets (4a; 31).

22. A method according to claim 21,
**characterized in** the the installation plan comprises a ground plan (1) and a wall layout (15) each containing symbols for the components to be mounted at the installation points as well as measures for the wiring pattern.

23. A method according to claim 21 or 22,
**characterized in that** the kit is placed in several portions of a container (B) which are sequentially accessible each, with the sequence of accessibility of the individual portions corresponding to the sequence of installation of the kit components in the building.

24. A method according to any of claims 21 to 23,
**characterized in that** at least one of the steps (a) and (b) is performed with the aid of a computer-assisted program.

25. A method according to any of claims 21 to 24,
**characterized in that** the routing of an information transfer bus (92) is included in addition in the installation plan, said bus (92) being passed via predetermined plug-type connector sockets (31) by means of prefabricated bus lines.

## Revendications

1. Boîtier de connexion à enfichage pour installation électrique d'un bâtiment ou d'une partie d'un bâtiment, présentant les caractéristiques suivantes :
(a) une partie de fond (33) avec une plaque de contact (39) dans laquelle sont fixées plusieurs rangées de lames de contact électriques (65 ; 69), des rangées déterminées étant interconnectées électriquement les unes aux autres pour le raccordement à un conducteur de phase (L), à un conducteur neutre (N), etc. et des lames de contact (69) étant éventuellement prévues par section dans d'autres rangées ;
(b) plusieurs emplacements de prise (83 ; 85) s'étendant perpendiculairement aux rangées pour des éléments de type de connexion (71 ; 81 ; 90 ; 91 ; 102) ;
(c) plusieurs éléments de mode de connexion (71 ; 81 ; 90 ; 91 ; 102) sont enfichés aux emplacements de prise et, d'une part, ils établissent un contact avec les lames de contact (65 ; 69) et, d'autre part, ils sont reliés électriquement avec des fils de puissance (21 ; 23 ; 25) ;
(d) de sorte que, grâce à l'agencement des plaques de contact (39) et des éléments de type de connexion enfichés (71 ; 81 ; 90 ; 91 ; 102), il se forme une matrice de points de contact dont les lames de contact (65; 69) forment les rangées et les éléments de mode de connexion (71 ; 81 ; 90 ; 91 ; 102) forment les colonnes, des liaisons sélectives pouvant être établies entre les lames de contact (65 ; 69) et les fils de puissance (21; 23; 25);
(e) et une partie supérieure (35) ;
(f) des ouvertures de passage (45 ; 49) étant formées entre la partie de fond (33) et la partie supérieure (35) pour des tronçons de lignes entrants et sortants (19).

2. Boîtier de connexion à enfichage selon la revendication 1,
**caractérisé en ce qu'**il est prévu des éléments de type de connexion (71 ; 81 ; 90 ; 91 ; 102) formés de manière à pouvoir enficher des connecteurs (27) reliés à des fils de puissance (21 ; 23 ; 25).

3. Boîtier de connexion à enfichage selon la revendication 1,
**caractérisé en ce qu'**il est prévu des éléments de mode de connexion ainsi formés, **en ce que** les éléments de type de connexion forment eux-mêmes des connecteurs reliés à des fils de puissance.

4. Boîtier de connexion à enfichage selon l'une quelconque des revendications 1 à 3,
**caractérisé en ce que** la plaque de contact (39) comporte une ligne omnibus (92) et **en ce qu'**il est prévu des emplacements d'enfichage pour des éléments de type de connexion actifs (90 ; 102) qui établissent un contact de ligne omnibus à l'état enfiché.

5. Boîtier de connexion à enfichage selon la revendication 4,
**caractérisé en ce qu'**il est prévu des éléments actionneurs et/ou des éléments détecteurs comme éléments de type de connexion actifs (90 ; 102).

6. Boîtier de connexion à enfichage selon l'une quelconque des revendications 1 à 5, **caractérisé en ce que** les ouvertures de passage sont formées par des évidement (45, 49) semi-circulaires appariés dans la partie de fond (33) et dans la partie supérieure (35).

7. Boîtier de connexion à enfichage selon l'une quelconque des revendications 1 à 6, **caractérisé en ce que** les ouvertures de passage (45, 49) sont définies par des points destinés à la rupture (47) dans une paroi latérale du boîtier de connexion (31).

8. Boîtier de connexion à enfichage selon l'une quelconque des revendications 1 à 7, **caractérisé en ce que** la partie supérieure (35) est encliquetable sur la partie de fond (33).

9. Boîtier de connexion à enfichage selon l'une quelconque des revendications 1 à 8, **caractérisé en ce que** la partie supérieure (35) est formée par un cadre ouvert des deux côtés sur le côté extérieur duquel un couvercle (37 ; 37') peut être monté.

10. Boîtier de connexion à enfichage selon l'une quelconque des revendications 1 à 9, **caractérisé en ce que** des connecteurs de ligne (27), d'une part, et des emplacements d'enfichage dans le boîtier de connexion (31), d'autre part, présentent un codage mécanique, électrique ou de couleur qui permet seulement une seule connexion entre un connecteur de tronçon de ligne (27) et un emplacement d'enfichage dans ce boîtier de connexion (31).

11. Boîtier de connexion à enfichage selon l'une quelconque des revendications 1 à 10, **caractérisé en ce qu'**il est prévu plusieurs plaques de contact (39) adjacentes dans le sens des rangées et un double élément de type de connexion (110) qui couple les deux plaques des contact (39).

12. Boîtier de connexion à enfichage selon l'une quelconque des revendications 1 à 11, **caractérisé en ce qu'**il est prévu une fibre optique (220c ; 222c ; 224c ; 226c ; 227c ; 330c) dans la plaque de contact (39c) et **en ce qu'**il est prévu des éléments de type de connexion (200c ; 280c) formés de manière à pouvoir transmettre des signaux optiques entre la fibre optique et l'élément de type de connexion.

13. Boîtier de connecteur à enfichage selon la revendication 12, **caractérisé en ce que** la fibre optique (220c ; 222c ; 224c ; 226c ; 227c) a une configuration en forme de U.

14. Boîtier de connexion à enfichage selon la revendication 12 ou 13, **caractérisé en ce que** la fibre optique (330c) est une ligne omnibus de données optique.

15. Module pour l'installation électrique d'un bâtiment ou d'une partie d'un bâtiment, présentant des boîtiers de connexion à matrice de points de contact (31) qui sont configurés selon l'une quelconque des revendications 1 à 14, et comportant, en outre :
(a) un plan d'exécution montrant le type et la position exacte de tous les points d'installation, à savoir les points pour les commutateurs, les prises de courant, etc., ainsi que le tracé et la longueur de tous les tronçons de lignes (19) entre deux points d'installation, les points d'installation et les tronçons de lignes (19) étant munis chacun d'un repère univoque, par exemple le numéro de position ; et
(b) une multitude de tronçons de lignes (19) préfabriqués avec des connecteurs (27) munis chacun d'un repère suivant le plan d'exécution ;
(c) une multitude de boîtiers de connexion (4a ; 31) étant prévus pour tous les points d'installation, munies chacune d'un repère suivant le plan d'exécution.

16. Module selon la revendication 15, **caractérisé par**
(d) une multitude de prises de courant et/ou de commutateurs (60a) et/ou d'autres composants équipés de connecteurs à enfichage (50a) qui doivent être montés sur les boîtiers de connexion.

17. Module selon la revendication 15 ou 16, **caractérisé en ce qu'**il est prévu des boîtiers de connexion (4a) qui contiennent plusieurs pièces de contact (20a) qui sont raccordées à des fils de puissance (L1 ; L2) et qui forment le côté des connexions à fiche (30a : 50a) du boîtier de connexion (4a) associé au boîtier de connexion (4a).

18. Module selon la revendication 17, **caractérisé en ce que** les pièces de contact (20a) comportent un codage, en particulier un codage de couleur.

19. Module selon l'une quelconque des revendications 15 à 18, **caractérisé en ce qu'**il est prévu des connecteurs (6b) qui comportent une enveloppe en matière isolante (16b) et des broches de contact par enfichage (12b) faisant saillie à partir de celui-ci, formées par les extrémités des brins des fils de puissance insérés (4b).

20. Module selon la revendication 19, **caractérisé en ce qu'**il est prévu pour chaque fil de puissance (4b) un dispositif de verrouillage servant de décharge de traction, configuré de préférence comme un disque de verrouillage (18b) en acier à ressort.

21. Procédé pour la réalisation d'une installation électrique dans un bâtiment ou une partie d'un bâtiment, utilisant un module selon l'une quelconque des revendications 15 à 20, **caractérisé par** les étapes suivantes :
(a) à partir d'un plan de construction du bâtiment ou de la partie du bâtiment, on établit un plan d'exécution à l'aide de consignes individuelles d'un client, montrant le type et la position exacte de tous les points d'installation, à savoir les points pour les commutateurs, les prises de courant, etc., ainsi que le tracé et la longueur de tous les tronçons de lignes (19) entre deux points d'installation, les points d'installation et les tronçons de lignes (19) étant munis chacun d'un repère univoque, par exemple le numéro de position,
(b) à l'aide du plan d'exécution, on établit une nomenclature pour :
(b1) les tronçons de lignes (19) ; et
(b2) les composants à monter aux points d'installation sous forme de boîtiers de connexion (4a ; 31) ;
(c) on réalise le module selon l'une quelconque des revendications 15 à 20;
(d) et, à l'aide du plan d'exécution, on réalise le montage des composants du module et la connexion électrique entre les extrémités des tronçons de lignes (19) et les boîtiers de connexion (4a ; 31).

22. Procédé selon la revendication 21, **caractérisé en ce que** le plan d'exécution comprend une projection horizontale (1) et une projection développée des parois (15) qui incluent chacune des symboles pour les composants à monter aux points d'installation et des cotes pour le tracé des lignes.

23. Procédé selon la revendication 21 ou 22, **caractérisé en ce que** le module est placé dans plusieurs zones d'un réservoir (B) accessibles les unes après les autres, la séquence d'accessibilité des zones individuelles correspondant à la séquence de montage des composants du module dans le bâtiment.

24. Procédé selon l'une quelconque des revendications 21 à 23, **caractérisé en ce qu'**au moins l'une des étapes (a) et (b) est réalisée à l'aide d'un programme informatique.

25. Procédé selon l'une quelconque des revendications 21 à 24, **caractérisé en ce que** la pose d'un bus de transfert de données (92) est incluse, en plus, dans le plan d'exécution, ce bus (92) étant amené sur des boîtiers de connexion prédéterminées (31) à l'aide de lignes omnibus préfabriquées.
